# FASCICULE DE BREVET EUROPEEN

(11) **EP 4 373 735 B1**
(45) Date de publication et mention de la délivrance du brevet: **14.01.2026**
(21) Numéro de dépôt: 22755079.5
(22) Date de dépôt: 08.07.2022
(51) Int. Cl.: B63B 27/10, B66C 23/18, B66C 23/52, F03D 13/10, B63B 27/16, B63B 73/60, B63B 75/00, B66C 1/10, B66C 13/08, F03D 13/25, F03D 80/50

(54) **DISPOSITIF POUR MANIPULER UNE CHARGE POUR LE MONTAGE OU LE DEMONTAGE D'UNE PALE SUR UNE ÉOLIENNE EN MER ET PROCÉDÉ METTANT EN OEUVRE UN TEL DISPOSITIF**
VORRICHTUNG ZUM HANDHABEN EINER LAST ZUM INSTALLIEREN ODER ENTFERNEN EINER SCHAUFEL AUF EINER OFFSHORE-WINDTURBINE UND VERFAHREN ZUM EINSETZEN EINER SOLCHEN VORRICHTUNG
DEVICE FOR HANDLING A LOAD FOR INSTALLING OR REMOVING A BLADE ON AN OFFSHORE WIND TURBINE AND METHOD FOR USING SUCH A DEVICE

(30) Priorité: 22.07.2021 FR 2107966; 07.10.2021 FR 2110634; 26.11.2021 FR 2112571; 28.01.2022 FR 2200731
(43) Date de publication de la demande: 29.05.2024
(73) Titulaire: DOLFINES, 78180 Montigny Le Bretonneux (FR)
(72) Inventeur: AUPERIN, Mathieu, 78000 VERSAILLES (FR); BOURDON, Jean-Claude, 78960 VOISINS LE BRETONNEUIX (FR); LEPOUTRE, Yann, 78670 Villennes sur Seine (FR); FREMONT, Fabien Carl, 78300 POISSY (FR)
(74) Mandataire: LLR
(86) Numéro de dépôt international: PCT/EP2022/069160
(87) Numéro de publication internationale: WO 2023/001601

(56) Documents cités:
- EP-A1- 2 619 445
- EP-A1- 2 889 251
- EP-A1- 3 568 372
- WO-A1-2013/093614
- WO-A1-2014/125460
- CA-A1- 3 129 885
- US-A1- 2013 125 397
- US-A1- 2015 337 798
- US-A1- 2015 368 075

## Description

La présente invention se rapporte au domaine des éoliennes implantées en mer. Elle se rapporte particulièrement au montage ou au démontage de pales de telles éoliennes. Elle se rapporte aussi à la manipulation de charges lourdes, notamment à la manipulation d'un équipement d'une nacelle d'une telle éolienne.

Lorsque le fond marin est suffisamment peu profond, l'éolienne peut comprendre un mât directement ancré dans le fond marin. Ces éoliennes fixes font généralement partie d'un champ d'éoliennes et des moyens importants sont mobilisés pour les ériger, notamment pour en installer la fondation, puis, pour poser le mât et y fixer la turbine et ses pales.

Cependant, lorsqu'il faut changer une pale d'une telle éolienne, on ne sait utiliser que des Jack-ups, c'est-à-dire des plateformes flottantes autoélévatrices munies de pieds et équipées d'une grue à flèche relevable. Ces plateformes s'appuient et se soulèvent d'elles-mêmes sur le fond marin grâce à leurs pieds en forme de colonne. Il est très délicat de manipuler une pale et cela demande des moyens importants, tant en capacité de hauteur qu'en capacité de charge. Il en va de même pour des charges lourdes équipant une nacelle de telles éoliennes, par exemple un générateur ou une boite de vitesses. Des Jack-ups aux capacités suffisantes sont peu nombreux, peu disponibles et leur intervention est extrêmement couteuse.

Là où le fond marin est trop profond, des éoliennes sont portées par des plateformes flottantes. Une telle plateforme flottante, peut avoir la forme d'une barge ou d'une structure de poutrelles reliant au moins trois flotteurs entre eux. Généralement, les éoliennes sont montées sur leur plateforme à quai, dans un port, puis tractées en mer, jusqu'à leur lieu d'exploitation.

Les éoliennes flottantes sont généralement implantées en haute mer. La profondeur de la mer est généralement si grande que ni l'éolienne ni une grue utilisable pour leur maintenance ne peuvent prendre appui sur le sol. Elles sont, indépendamment l'une de l'autre, soumises à la houle. Or, l'accostage d'une pale sur le rotor qui doit la porter ou d'un générateur dans la nacelle qu'il doit équiper impose une approche quasi statique. Cela nécessite des conditions de mer et de vent très favorables, voire exceptionnelles. La seule solution réaliste connue est de ramener l'éolienne avec sa plateforme jusqu'à un port dans lequel l'entretien nécessaire peut se faire. Néanmoins, une telle solution est particulièrement consommatrice de temps, d'énergie et de moyens.

US2013/125397A1, US2015/368075A1, US2015/337798A1 et WO2014/125460A1 sont des exemples de systèmes d'installation et/ou de maintenance d'éolienne en mer qui sont représentatifs de l'état de l'art.

Le problème à résoudre consiste à trouver un procédé et des moyens pour changer une pale d'une éolienne flottante ou y manipuler une charge lourde, plus rapide, plus simple et moins onéreux que les procédés connus.

Pour résoudre ce problème, l'invention propose un ensemble d'après la revendication indépendante 1 et un procédé d'après la revendication indépendante 9 mettant en oeuvre ledit ensemble pour monter ou démonter une pale ou manipuler une charge lourde sur une éolienne notamment portée par une plateforme, notamment une plateforme flottante, dans lequel on monte provisoirement une grue ou un engin ayant un mât comprenant plusieurs éléments dont certains sont télescopables entre eux.

Un premier objet non revendiqué de l'invention est un procédé pour manipuler une charge, notamment une pale d'un système d'éolienne en mer comprenant une éolienne et une plateforme, cette éolienne comprenant un mât et une nacelle portée par le mât, la nacelle comprenant un rotor ayant un nez et des pales qui s'étendent radialement depuis ce nez, parmi lesquelles la pale qui doit éventuellement être manipulée, qui comprend des étapes pour :
- immobiliser la nacelle et le rotor dans une position de manipulation, qui ne gêne pas un montage d'une grue ; et,
- monter cette grue sur la plateforme du système d'éolienne ;
- manipuler la charge, éventuellement la pale ;
- démonter la grue ; et,
- libérer les mouvements de la nacelle et du rotor.

L'étape de montage peut comprendre une étape pour fixer une base de la grue sur la plateforme du système d'éolienne. Le procédé comprend avantageusement la fourniture d'une grue ayant un mât comprenant plusieurs éléments. Certains des éléments peuvent être télescopables et l'étape de montage de la grue peut comprendre une étape de télescopage de ses éléments entre eux.

Dans un procédé selon l'invention pour manipuler une charge, par exemple pour remplacer une ancienne pale par une nouvelle, l'étape pour manipuler la charge peut comprendre une étape pour déposer l'ancienne pale puis une étape pour poser la nouvelle pale. De préférence, dans la position de manipulation, l'ancienne pale est en position sensiblement horizontale.

L'invention porte aussi sur un système d'éolienne pour la mise en œuvre d'un procédé selon l'invention, dans lequel la plateforme du système comprend des moyens pour y fixer la base de la grue. La plateforme peut comprendre au moins trois flotteurs reliés entre eux par une structure rigide, notamment constituée de poutres, cette structure servant de support pour l'éolienne, les moyens pour fixer la base de la grue étant disposés au sommet de l'un des flotteurs.

L'invention porte aussi sur une grue pour la mise en œuvre d'un procédé selon l'invention qui comprend une base pour se fixer à un système selon l'invention. Avantageusement, la grue a un mât comprenant plusieurs éléments, de préférence, au moins certains des éléments étant télescopables entre eux.

De préférence, la grue comprend des moyens de levage permettant un déplacement horizontal et un déplacement vertical de la pale. Les moyens de levage peuvent comprendre un manchon et une double flèche montée pour coulisser horizontalement dans le manchon et dont deux extrémités dépassent chacune d'un côté respectif du manchon, chacune des extrémités portant un câble de levage respectif. Les moyens de levage peuvent alternativement comprendre des moyens de palonnier.

Un deuxième objet non revendiqué de l'invention est un procédé pour manipuler une charge sur une éolienne qui comprend un mât rigidement fixé à un fond marin et une nacelle portée par ce mât de l'éolienne, cette nacelle comprenant un rotor ayant des pales qui s'étendent radialement, comprenant des étapes pour :
- fournir une plateforme autoélévatrice ;
- immobiliser la plateforme à proximité de ladite éolienne ; puis,
- monter un système de levage sur la plateforme autoélévatrice, système comprenant un mât sensiblement vertical selon un axe du système et constitué de plusieurs éléments et un outil de levage fixé sur un élément supérieur ;
- immobiliser la nacelle dans une position permettant la manipulation de ladite charge ;
- élever le mât ;
- saisir la charge ;
- abaisser le mât ; puis,
- libérer les mouvements de la nacelle et du rotor.

Ainsi, un procédé pour manipuler ou fixer ou retirer une pale d'une éolienne qui comprend un mât rigidement fixé à un fond marin et une nacelle portée par ce mât, cette nacelle comprenant un rotor ayant des pales qui s'étendent radialement, comprend des étapes pour :
- fournir une plateforme autoélévatrice ;
- immobiliser ladite plateforme à proximité de ladite éolienne ;
- monter un système de levage sur la plateforme, le système comprenant un mât sensiblement vertical selon un axe du système et constitué de plusieurs éléments et un outil de levage fixé sur un élément supérieur ;
- immobiliser la nacelle dans une position permettant la manipulation de ladite charge ;
- élever le mât ;
- manipuler la pale ;
- abaisser le mât ; et,
- libérer les mouvements de la nacelle.

Avantageusement, certains des éléments sont télescopables entre eux et l'étape de l'élévation du système comprend une étape de télescopage de ces éléments entre eux.

Une plateforme autoélévatrice pour la mise en œuvre d'un procédé selon le deuxième objet de l'invention comprend avantageusement des moyens pour y fixer une base du système de levage.

Dans un système mis en œuvre dans un procédé selon le deuxième objet de l'invention, l'outil est fixé sensiblement au sommet d'un élément supérieur de mât et forme avec le mât une forme de « T ».

L'outil de levage peut comprendre une poutre horizontale montée au sommet de l'élément supérieur et formant un « T » avec cet élément, un coulisseau monté coulissant horizontalement sur la poutre, ce coulisseau portant des moyens d'assise prévus pour y faire reposer une pale. La poutre peut en outre être montée rotative autour de l'axe du système et l'outil peut comprendre, à une extrémité de la poutre, des moyens de treuil pour lever une charge. De préférence, les moyens d'assise sont ajustables en hauteur, notamment pour se conformer à la pale qui doit y être déposée.

L'outil de levage peut comprendre un manchon et une double flèche montée pour coulisser horizontalement dans ce manchon et dont deux extrémités dépassent chacune d'un côté respectif du manchon, chacune des extrémités portant un câble de levage respectif.

Avantageusement, certains au moins parmi les éléments formant le mât du système sont télescopables entre eux.

De préférence, le mât comprend un élément inférieur formant une base prévue pour se fixer sur une plateforme selon le deuxième objet de l'invention.

Selon un autre mode de réalisation, un système selon l'invention peut comprendre une base fixe relativement à la plateforme, le mât étant monté rotatif sur la base autour de l'axe du système, l'outil de levage comprenant une poutre sensiblement horizontale rigidement disposée au sommet de l'élément supérieur, un treuil étant fixé à l'élément inférieur de sorte qu'il tourne autour de l'axe, en même temps que le mât, et, un câble relié au treuil, le système comprenant en outre un premier renvoi de câble et un deuxième renvoi de câble, chacun disposé à une extrémité respective de la poutre de sorte que :
- entre les deux renvois, le câble est sensiblement horizontal ;
- le câble s'étend verticalement entre le treuil et le premier renvoi ; et,
- une extrémité libre du câble s'étend au-delà du deuxième renvoi pour y suspendre une charge.

Avantageusement, le système comprend des moyens de bras pour relier le mât du système avec le mât de l'éolienne, de préférence au moins un bras monté coulissant sur le mât de l'éolienne.

Un troisième objet non revendiqué de l'invention est un procédé pour manipuler une charge pour un système comprenant une plateforme ayant des flotteurs reliés par une structure de poutrelles et une éolienne ayant un mât monté sur la plateforme, comprenant :
- la fourniture d'une charpente provisoire horizontale et la pose de cette charpente sur le système, en appui sur la plateforme ; et,
- le montage d'un engin de levage sur la charpente.

L'invention ne nécessite pas de retour au port, et seulement un bateau de dimension modeste équipé d'une grue conventionnelle pour l'offshore, ayant par exemple une capacité de quelques centaines de tonnes à trente mètres pour une hauteur sous crochet d'au moins 50m, avantageusement munie d'un compensateur de houle. Ce type de bateaux est facilement mobilisable et relativement peu coûteux ; les techniques sont éprouvées.

De préférence, les moyens de levage comprennent un fût vertical et, au sommet du fût, un outil pour porter la charge. Par exemple, l'outil peut comprendre des moyens pour manipuler une pale pour l'éolienne ou des moyens de grue. Avantageusement, le fût comprend des éléments télescopables entre eux.

De préférence, la charpente est disposée de sorte qu'elle comprend au moins deux emplacements pour y monter l'engin de levage, un des emplacements étant plus proche du mât de l'éolienne que l'autre emplacement.

Une extrémité de la charpente peut comprendre un chevêtre prévu pour prendre appui sensiblement sur une paroi périphérique d'un flotteur de la plateforme. Un pied du mât de l'éolienne peut comprendre une console pour y appuyer une extrémité de la charpente.

Une extrémité de la charpente peut prendre appui sur un pied du mât, et, une autre extrémité de cette charpente prendre appui sur un flotteur.

Une extrémité de la charpente peut prendre appui sur un flotteur porteur du mât. Alternativement, chaque extrémité de la charpente peut prendre appui sur une poutrelle respective de la plateforme.

Aussi, la charpente a avantageusement une section transversale en forme de « U » inversé et comprend deux longerons portant ensemble un tablier, de sorte que l'on peut disposer la charpente au-dessus d'une passerelle du système.

Un quatrième objet non revendiqué de l'invention est un outil pour mettre en place ou retirer une pale d'une éolienne qui comprend un palonnier et un positionneur, le palonnier étant prévu pour lever la pale à l'aide d'une grue, le palonnier et le positionneur comprenant des moyens de prise réciproque, le positionneur comprenant des moyens pour le fixer sur des moyens d'élévation et des moyens pour orienter et déplacer la pale relativement aux moyens d'élévation.

De préférence, les moyens de prise réciproque comprennent des moyens d'emboîtement réciproque. Avantageusement, les moyens d'emboîtement comprennent deux perches et des manchons pour y enfiler les tiges dont l'une peut être enfilée avant l'autre, de préférence deux tiges de longueurs différentes.

Le palonnier peut comprendre au moins une pince pour prendre la pale, de préférence une vergue disposée longitudinalement et deux pinces, chacune à une extrémité longitudinale respective de la vergue. Chaque pince peut comprendre une mâchoire inférieure et une mâchoire supérieure, la mâchoire inférieure étant fixe relativement à la vergue et la mâchoire supérieure étant mobile verticalement, de sorte que lorsque la pale repose sur la mâchoire inférieure, la mâchoire supérieure vient la pincer pour la maintenir en prise.

Le positionneur comprend avantageusement :
- des moyens pour faire basculer la pale autour d'un axe transversal horizontal ;
- des moyens pour déplacer longitudinalement la pale ;
et, de préférence,
- des moyens pour déplacer transversalement la pale ; et/ou,
- des moyens pour faire tourner la pale autour d'un axe vertical.

Le positionneur peut notamment comprendre :
- une base prévue pour y faire reposer le palonnier, la base comprenant les moyens de prise du positionneur sur ledit palonnier ;
- un chariot ;
- un guide longitudinal ; et,
- un connecteur ;

le guide étant disposé à une extrémité supérieure du connecteur et relié à ce dernier par une liaison pivot qui permet un basculement du guide autour d'un axe horizontal transversal, un actionneur basculeur permettant de piloter le basculement ;
le chariot étant monté pour coulisser longitudinalement sur le guide, un actionneur longitudinal permettant de piloter une translation longitudinale du chariot par rapport au guide ;
la base étant montée pour coulisser transversalement sur le chariot, un actionneur transversal permettant de piloter une translation transversale de la base relativement au chariot.

Plusieurs modes d'exécution de l'invention seront décrits ci-après, à titre d'exemples non limitatifs, en référence aux dessins annexés dans lesquels :
Les figures 1 à 13 illustrent le deuxième objet de l'invention.

La figure 14 illustre le premier objet de l'invention.

Les figures 15 à 24 illustrent le troisième objet de l'invention.

Les figures 25 à 37 illustrent le quatrième objet de l'invention.

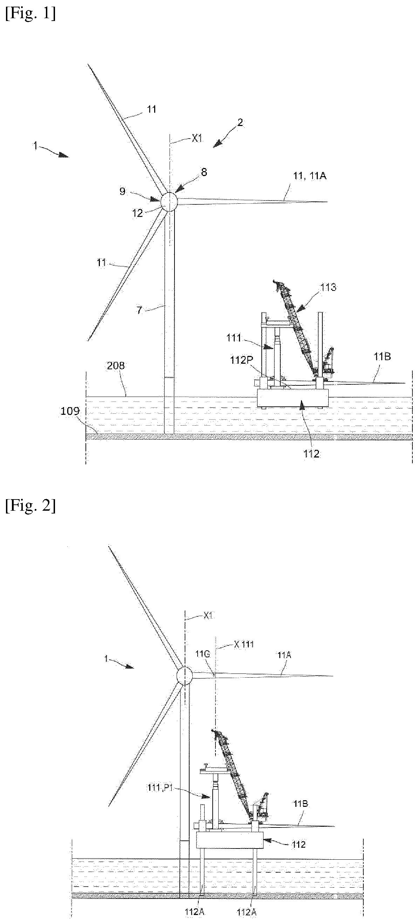

[Fig. 1] illustre schématiquement, en élévation, une première étape d'un premier procédé selon l'invention pour changer une pale endommagée d'une éolienne à l'aide d'un premier mode de réalisation d'un système de levage selon l'invention, étape dans laquelle on apporte une pale de rechange sur une plateforme autoélévatrice ;
[Fig. 2] illustre schématiquement, une deuxième étape de ce procédé dans laquelle la plateforme est installée au pied de l'éolienne ;

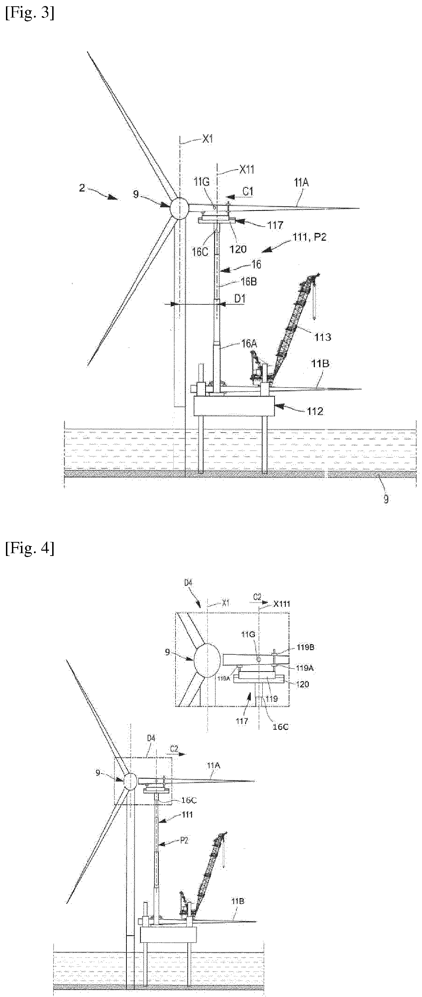

[Fig. 3] illustre schématiquement, une troisième étape de ce procédé dans laquelle le système de levage se saisit de la pale endommagée ;
[Fig. 4] illustre schématiquement, une quatrième étape de ce procédé dans laquelle le système de levage désaccouple la pale endommagée ;

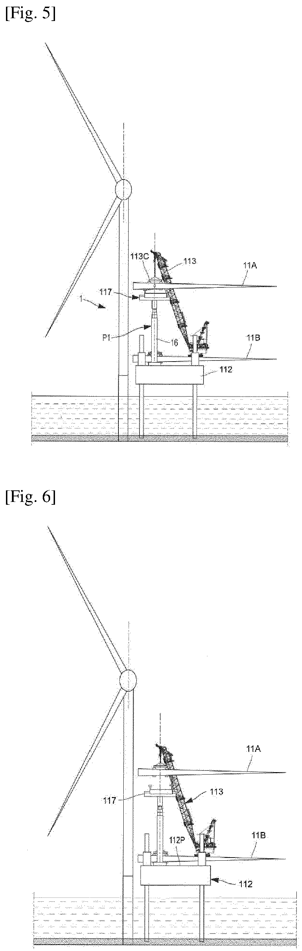

[Fig. 5] illustre schématiquement, une cinquième étape de ce procédé dans laquelle le système de levage abaisse la pale endommagée jusqu'à ce qu'elle puisse être reprise par une grue à flèche en treillis ;
[Fig. 6] illustre schématiquement, une sixième étape de ce procédé dans laquelle la pale endommagée est reprise par la grue à flèche en treillis ;

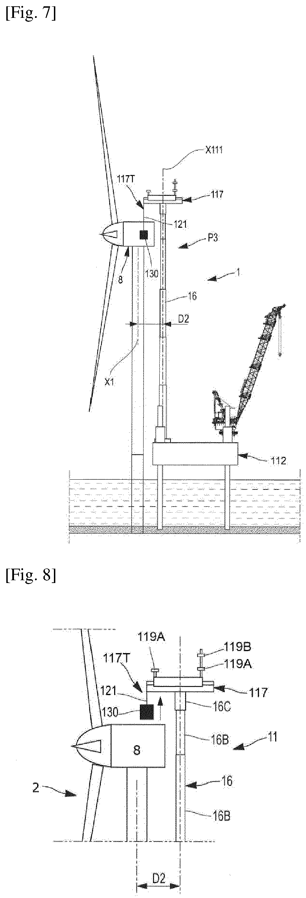

[Fig. 7] illustre schématiquement, une première étape d'un deuxième procédé selon l'invention pour enlever une charge, ici un équipement, d'une nacelle de l'éolienne à l'aide du système de levage illustré aux figures précédentes, étape dans laquelle le système saisit la charge ;
[Fig. 8] illustre schématiquement, une deuxième étape du deuxième procédé dans laquelle le système lève la charge ;

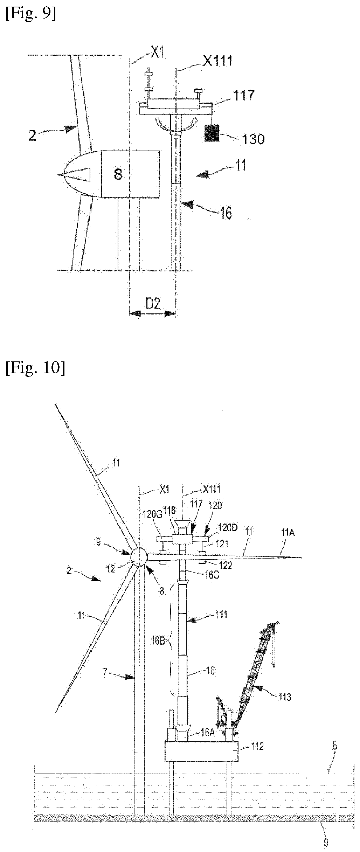

[Fig. 9] illustre schématiquement, une troisième étape du deuxième procédé dans laquelle le système oriente la charge ;
[Fig. 10] illustre schématiquement, en élévation, un deuxième mode de réalisation pour un système selon l'invention en train de saisir une pale de l'éolienne ; et,

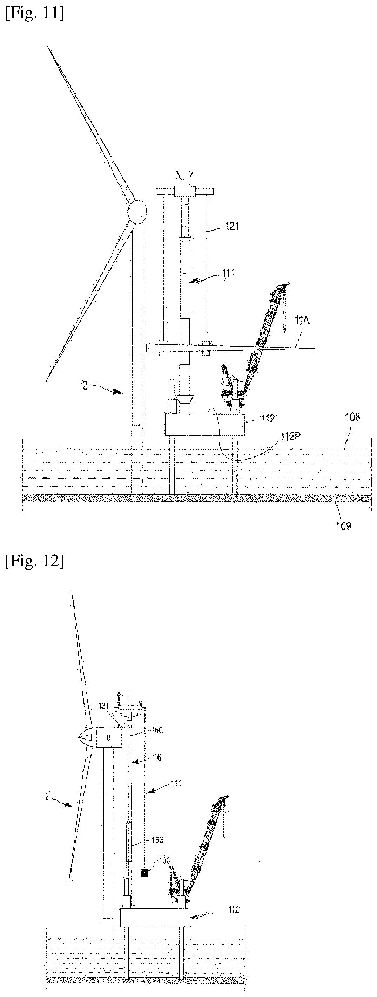

[Fig. 11] illustre schématiquement le système de la figure 10 en train d'abaisser la pale ;
[Fig. 12] illustre schématiquement une étape d'un perfectionnement du premier mode de réalisation du système selon l'invention tel qu'illustré aux figures 7 à 9, dans une étape d'enlèvement d'une charge ; et,

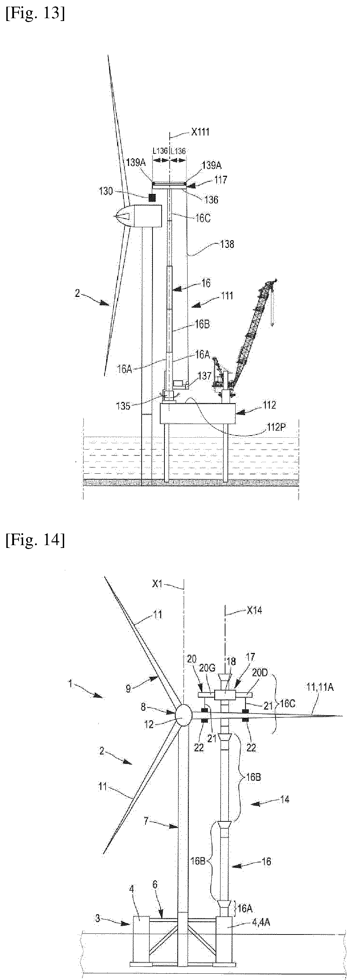

[Fig. 13] illustre schématiquement un troisième mode de réalisation pour un système selon l'invention, dans une étape d'enlèvement d'une charge.
[Fig. 14] représente schématiquement, en élévation, une grue selon l'invention, implantée sur une plateforme d'une éolienne flottante, en train de manipuler une pale de cette éolienne.

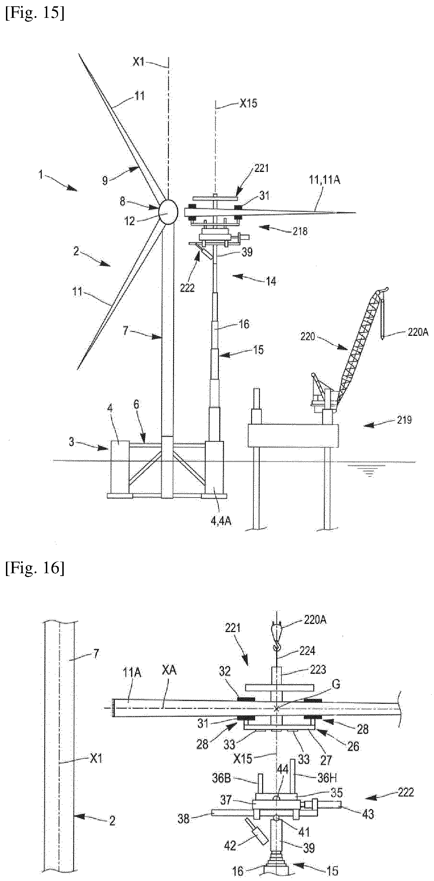

[Fig. 15] illustre schématiquement, une vue d'ensemble, en élévation, d'un changement de pale d'une éolienne selon un procédé utilisant un outil selon l'invention ;
[Fig. 16] illustre schématiquement en élévation, une première étape de ce procédé, dans laquelle on approvisionne une pale à mettre en place sur l'éolienne ;

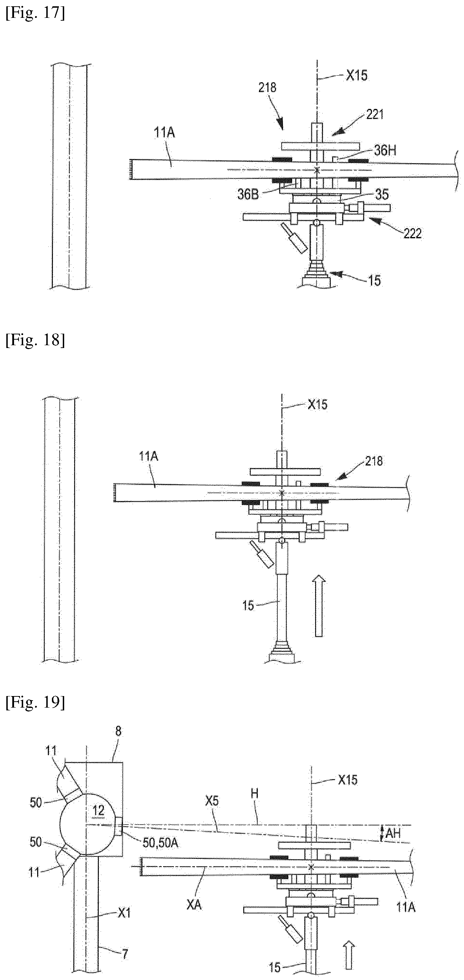

[Fig. 17] illustre schématiquement en élévation, une deuxième étape du procédé dans laquelle la pale est disposée sur un système de levage ;
[Fig. 18] illustre schématiquement en élévation, une troisième étape du procédé dans laquelle le système de levage soulève la pale ;
[Fig. 19] illustre schématiquement en élévation, une quatrième étape du procédé dans laquelle le système de levage approche la pale du rotor de l'éolienne ;

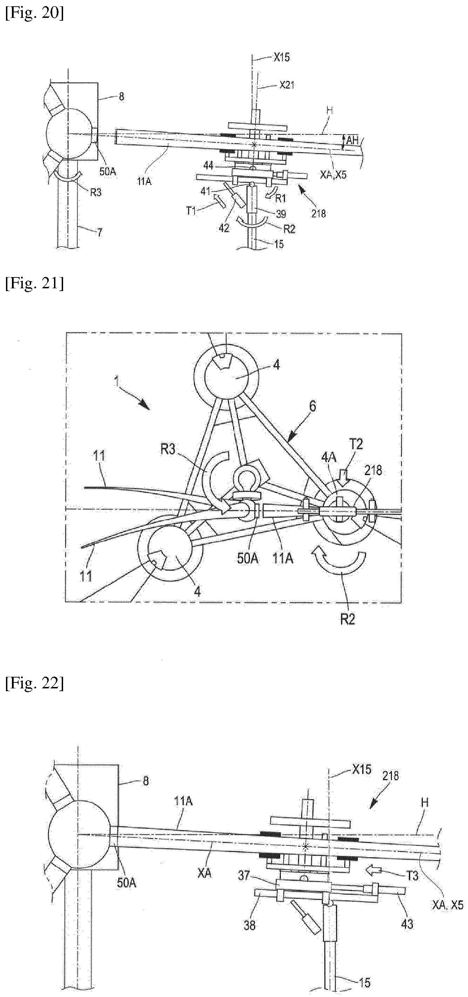

[Fig. 20] illustre schématiquement en élévation, une cinquième étape du procédé dans laquelle l'outil oriente la pale en direction d'une bride sur laquelle elle doit être fixée ;
[Fig. 21] illustre schématiquement en vue de dessus, la cinquième étape ;
[Fig. 22] illustre schématiquement en élévation, une sixième étape du procédé dans laquelle l'outil amène la pale en contact avec la bride et où on l'y fixe ;

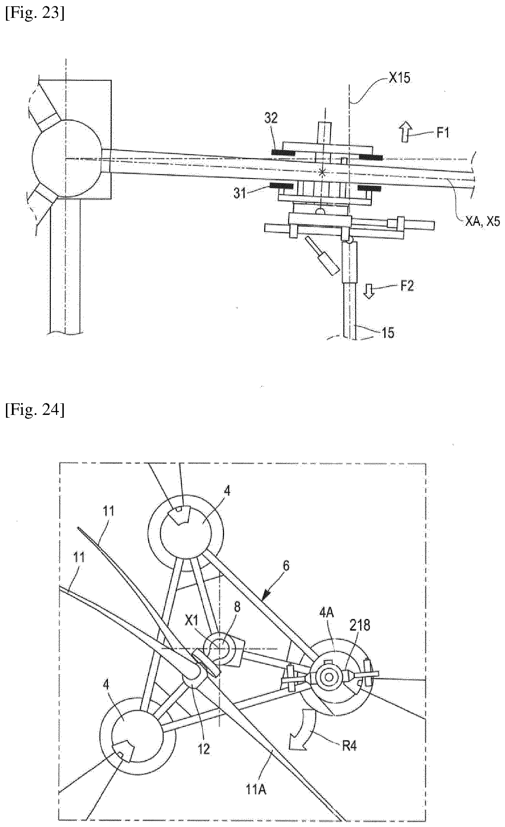

[Fig. 23] illustre schématiquement en élévation, une huitième étape du procédé dans laquelle l'outil libère la pale de sa prise ; et,
[Fig. 24] illustre schématiquement en vue de dessus, une huitième étape du procédé dans laquelle la nacelle de l'éolienne tourne pour dégager la pale de l'emprise de l'outil.

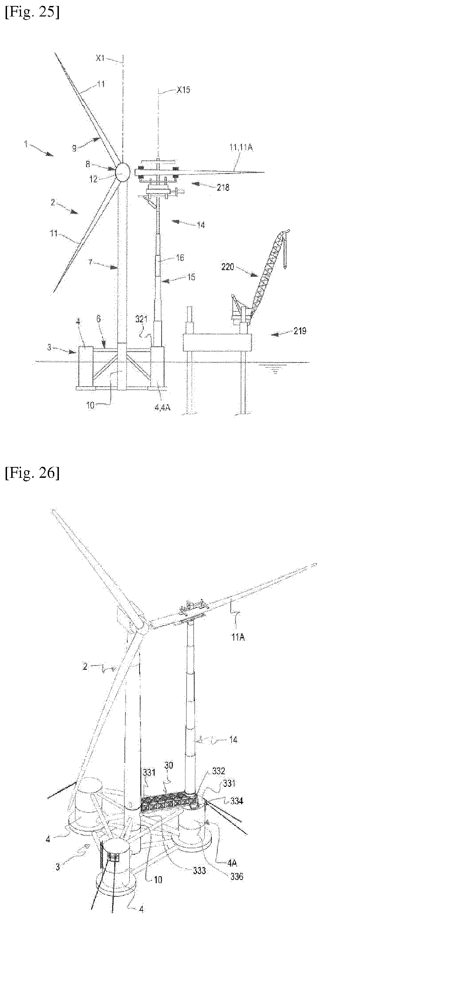

[Fig. 25] illustre schématiquement, par une vue d'ensemble en élévation, un premier procédé pour entretenir une éolienne dans lequel on utilise un outil fixé au sommet d'un fût télescopique porté par un flotteur d'une plateforme supportant l'éolienne ;
[Fig. 26] illustre schématiquement, par une vue d'ensemble en perspective, un deuxième procédé pour entretenir une éolienne qui diffère de celui illustré à la figure 25 en ce que le fût télescopique est ici porté par une charpente disposée entre un flotteur et le mât de l'éolienne ;

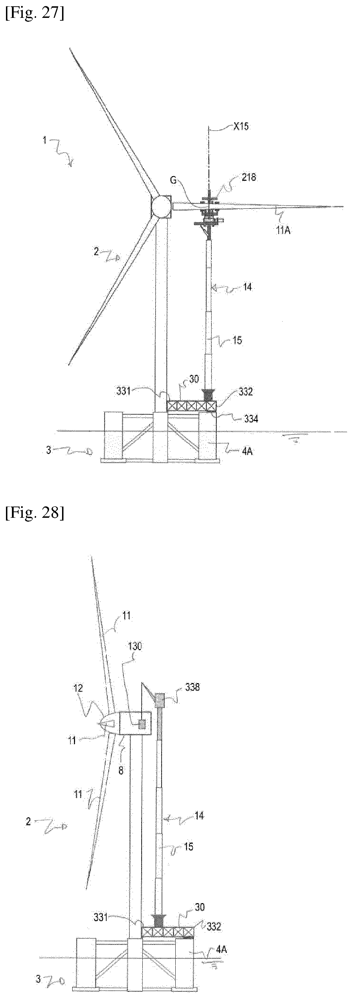

[Fig. 27] illustre schématiquement, par une vue d'ensemble en élévation, le changement d'une pale de l'éolienne à l'aide du procédé illustré à la figure 26 ;
[Fig. 28] illustre schématiquement, par une vue d'ensemble en élévation, la manipulation d'une charge lourde à l'aide du procédé illustré à la figure 26 ;

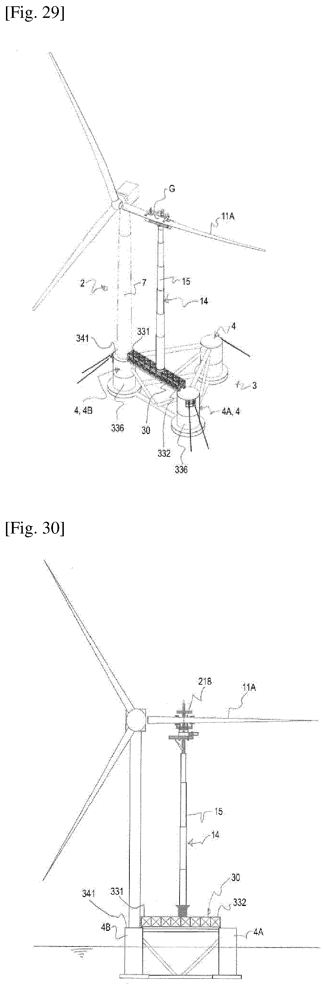

[Fig. 29] illustre schématiquement, par une vue d'ensemble en perspective, un troisième procédé pour entretenir une éolienne qui diffère de ceux illustrés aux figures 25 et 26 en ce que le fût télescopique est ici porté par une charpente disposée entre deux flotteurs dont l'un supporte le mât de l'éolienne ;
[Fig. 30] illustre schématiquement, par une vue d'ensemble en élévation, le changement d'une pale de l'éolienne à l'aide du procédé illustré à la figure 29 ;

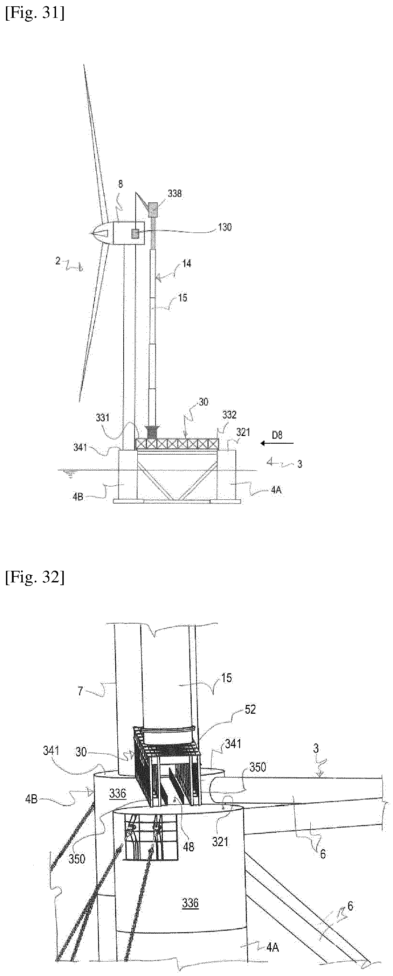

[Fig. 31] illustre schématiquement, par une vue d'ensemble en élévation, la manipulation d'une charge lourde à l'aide du procédé illustré à la figure 29 ;
[Fig. 32] illustre schématiquement et en perspective, des détails d'une charpente de support utilisée dans le procédé illustré à la figure 29 ;

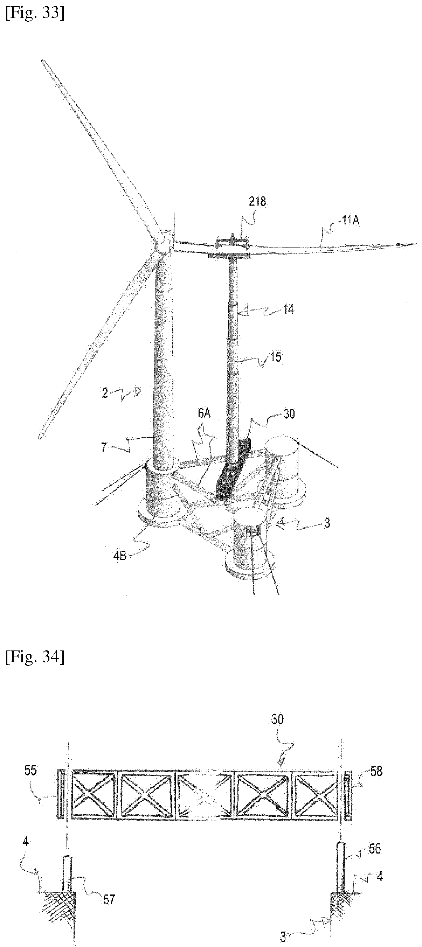

[Fig. 33] illustre schématiquement, par une vue d'ensemble en perspective, un quatrième procédé pour entretenir une éolienne qui diffère de deux des figures 26 à 32, en ce que le fût télescopique est porté par une charpente dont les extrémités s'appuient sur des poutrelles tubulaires reliant les flotteurs entre eux ; et,
[Fig. 34] illustre schématiquement un mode de mise en œuvre d'une charpente selon l'invention.

On va maintenant décrire le premier objet de l'invention, en référence à la figure 14. Dans la description, les termes « vertical » et « horizontal » se rapportent à une position d'équilibre du système d'éolienne, tel que représenté aux figures, arbitrairement supposée sans vent ni houle. Le mat de l'éolienne est considéré comme vertical pour simplifier la description, bien que sa position soit dans la réalité soumise aux effets de la houle et du vent. Aussi, les termes « gauche » ou « droite » n'ont rien d'absolu et font généralement référence à une position sur une des figures sans qu'ils puissent être considérés comme une limitation à la portée de l'invention.

La figure 14 illustre un système d'éolienne 1. Dans l'exemple illustré, le système comprend une éolienne 2 montée sur une plateforme flottante 3. La plateforme 3 comprend des flotteurs 4 et une structure rigide 6. Les flotteurs sont généralement au nombre de trois ou quatre. L'éolienne s'étend verticalement selon un axe principal X1 et les flotteurs sont régulièrement répartis autour de cet axe X1. La structure 6 relie les flotteurs entre eux et supporte l'éolienne 2. Un tel système est notamment connu du document FR 3 053 020 A1 (Dietswell).

Dans cet exemple, l'éolienne comprend un mât 7 tubulaire portant en son sommet une nacelle 8 dont l'unique rotor 9 comprend trois pales 11 fixées à un nez 12.

La figure 14 illustre le changement d'une pale 11A par un procédé selon l'invention à l'aide d'une grue 14. La grue 14 est monté au sommet d'un flotteur porteur 4A parmi les flotteurs 4 de la plateforme 3.

Dans l'exemple illustré, la grue comprend un mât 16 et une tête de levage 17. Le mât 16 s'étend verticalement selon un axe de grue X14 parallèle à l'axe principal X1, depuis le flotteur porteur 4A. Le mât comprend un élément inférieur 16A, deux éléments intermédiaires 16B et un élément supérieur 16C. Les éléments intermédiaires 16B sont sensiblement identiques entre eux. La tête de levage 17 est fixée à l'élément supérieur 16C.

Le flotteur porteur 4A comprend des moyens de fixation (non représentés) pour une base du mât 16. L'élément inférieur 16A comprend ou constitue la base du mât 16.

La tête comprend un manchon 18 et une double flèche 20. Le manchon 18 est fixé à l'élément supérieur 16C ; il est déporté relativement au mât 16 de la grue 14. À la figure 14, le manchon est déporté vers l'avant de la figure. La double flèche 20 est montée dans le manchon de façon à pouvoir y coulisser horizontalement. À la figure 14, le coulissement est prévu de gauche à droite de la figure. La double-flèche 20 comprend deux extrémités 20D, 20G, dépassant du manchon, respectivement à droite et à gauche du manchon sur la figure 14. Le déport du manchon relativement au mât évite que la pale 11A manipulée vienne en interférence avec le mât.

Chaque extrémité 20D, 20G de la flèche 20 porte un câble de levage respectif 21, monté sur treuil. Chaque câble 21 porte un crochet 22.

Un coulissement horizontal de la flèche 20 dans le manchon 18 permet d'éloigner ou de rapprocher la pale du nez. Un enroulement ou un déroulement simultané des câbles 21, a une même vitesse, permet une translation, respectivement de bas en haut ou de haut en bas, de la pâle. Un usage indépendant des câbles, permet de contrôler l'inclinaison la pale relativement à l'horizontale.

Dans la position illustrée, la pale à changer 11A repose horizontalement sur les crochets 22, en vis-à-vis du nez 12. Dans cette position, la pale 11A peut être boulonnée au nez ou déboulonnée du nez 12.

Avantageusement, au moins les éléments intermédiaires et supérieurs 16B- 16C du mât 16 sont télescopables entre eux. Ainsi, la grue peut être montée à l'aide d'une grue flottante de capacité et de portée réduites.

Les éléments peuvent être tubulaires ou en structure treillis.

Dans un procédé selon l'invention, on oriente d'abord la nacelle et on la maintient dans une position qui ne gêne pas le montage de la grue et on monte la grue. Lorsqu'il s'agit de démonter la pale 11A on peut utiliser un mécanisme d'orientation de la nacelle autour de l'axe principal X1 (yaw, en anglais) pour rapprocher la pale de la grue et la mettre dans une position dans laquelle elle peut être aisément saisie par les moyens de levage. Lorsqu'une nouvelle pale a été mise en place on peut utiliser le même mécanisme pour éloigner la pale avant démontage de la grue.

Bien sûr, ce premier objet de l'invention n'est pas aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus en référence à la figure 14, à la lumière de l'enseignement qui vient de lui être divulgué.

Ainsi, il peut être prévu des bracons entre le mât de l'éolienne et le mât de grue, afin de pouvoir utiliser une grue plus légère.

Aussi, au lieu de câbles indépendants, la tête de levage peut comprendre un palonnier. Aussi, à la place de crochets, les moyens de levage peuvent comprendre au moins un berceau sur lequel la pale peut reposer, le temps de sa mise en œuvre ; ainsi, un simple mouvement vertical de ce berceau permet de prendre la pale à manipuler ou de la libérer.

Un tel procédé n'est pas réservé aux éoliennes du type décrit, notamment pas aux éoliennes montées sur une structure reliant des flotteurs et décrites par le document FR 3 053 020 A1 (Dietswell). Un tel procédé est aussi applicable lorsque l'éolienne n'est pas centrée sur la structure, mais excentrée ; par exemple portée par l'un des flotteurs, tel qu'enseigné par le document EP 2 727 813 A1 (Principle Power INC) ou par exemple sur le bord d'un anneau en béton, tel qu'enseigné par le document FR 2 970 696 A1 (Ideol). Un tel procédé peut aussi s'appliquer à des éoliennes montées sur une plateforme de type barge ou à des éoliennes dont la plateforme comprend des ancrages rigides qui la maintiennent fixée au fond de la mer.

La grue étant fixée sur la plateforme de l'éolienne, elles ont des positions relatives fixes, malgré les mouvements dus à la houle et au vent, ce qui réduit notablement les difficultés de mise en place de la pale. En outre, l'utilisation d'une grue modulaire permet de réduire les moyens nécessaires à la mise en place de la pale. En outre, il n'est pas besoin de déplacer la plateforme et son éolienne jusqu'à un port, de sorte que, notamment, l'arrêt de production provoqué par un changement de pale est notablement réduit.

Bien entendu, une grue selon l'invention peut être utilisée pour d'autres activités que le changement d'une pale. Par exemple, elle peut être utilisée pour des activités de maintenance lourde, telle que le changement d'un équipement situé dans la nacelle, notamment le changement d'un générateur ou d'un transformateur.

On va maintenant décrire le deuxième objet de l'invention, en référence aux figures 1 à 13. Certains termes utilisés, tels que « gauche » ou « droite » n'ont rien d'absolu et font généralement référence à une position sur une des figures sans qu'ils puissent être considérés comme une limitation à la portée de l'invention.

Les figures 1 à 13 illustrent une éolienne 2. Dans l'exemple illustré, l'éolienne 2 comprend un mât 7 tubulaire portant en son sommet une nacelle 8 dont un unique rotor 9 comprend trois pales 11 fixées à un nez 12. L'éolienne est une éolienne fixe implantée en mer 208. Le mât 7 s'étend selon un axe d'éolienne X1 vertical depuis le fond 109 de la mer, dans lequel il est ancré.

Les figures 1 à 6 illustrent le changement d'une pale 11A par un premier procédé selon l'invention à l'aide d'un système de levage 111. Les figures 1 à 6 illustrent un premier mode de réalisation du système de levage. Le système 111 y est monté sur une plateforme autoélévatrice de type jack-up 112. La plateforme 112 comprend une grue secondaire à flèche basculante 113, faite d'un treillis métallique.

Comme illustré à la figure 1, la plateforme 112 est conduite par flottaison jusqu'à l'éolienne 2. Elle porte, allongée sur son pont 112P, une pale de remplacement 11B pour la pale endommagée 11A.

Aux figures 2 à 6, la plateforme 112 est représentée immobilisée à proximité du mât 7 de l'éolienne 2, dressée sur ses pieds 112A qui reposent sur le fond marin 9. La plateforme 112 et le système de levage 111 sont disposés de sorte que les axes X1 de l'éolienne et X111 du système sont à une première distance D1 l'un de l'autre, adaptée à la mise en œuvre du premier procédé.

Comme illustré aux figures 1 et 2, lors du déplacement de la plateforme et lors de son dressage à proximité de l'éolienne, le système de levage est dans une position rétractée P1. Pour atteindre la pale endommagée 11A, le système peut prendre une position déployée P2, notamment illustrée aux figures 3 et 4.

Dans l'exemple illustré, le système comprend un mât 16 et un outil de levage 117. Le mât 16 s'étend verticalement selon un axe principal X111 du système parallèle à l'axe d'éolienne X1, depuis la plateforme 112. Le mât 16 comprend un élément inférieur 16A, des éléments intermédiaires 16B et un élément supérieur 16C. L'outil 117 est fixé à l'élément supérieur 16C. L'élément inférieur 16A comprend ou constitue une base du mât 16. La plateforme 112 comprend des moyens de fixation (non représentés) pour la base du mât 16. Dans ce premier mode de réalisation, les éléments intermédiaires 16B sont montés télescopables entre eux et à l'intérieur de l'élément inférieur 16A ; leur télescopage permet d'élever le mât depuis la position rétractée P1 à la position déployée P2 et inversement d'abaisser le mât depuis la position déployée à la position rétractée.

Comme particulièrement illustré sur le détail D4 de la figure 4, l'outil 117 comprend un coulisseau 118 et une double flèche 120. Le la double flèche est fixée à l'élément supérieur du système de levage 111. Le coulisseau est monté coulissant horizontalement sur la double flèche 120. Le coulisseau comprend à chacune de ses extrémités, une assise 119A, respectivement à droite et à gauche dans la position des figures. Les assises 119A sont prévues pour y faire reposer sensiblement horizontalement une pale, de sorte que son centre de gravité soit situé entre les deux assises. Le coulisseau 119 comprend aussi des moyens de pince 119B, disposés au-dessus de l'assise 119A située à droite. Les moyens de pince 119B permettent de sécuriser la pale sur les moyens d'assise en pinçant la pale entre les moyens de pince et l'assise située en dessous.

On va maintenant décrire un procédé pour remplacer la pale endommagée 11A par la pale de rechange 11B en référence aux figures 1 à 6.

Dans une première étape, illustrée à la figure 1, on conduit la plateforme 112 jusqu'à l'éolienne 2,
avec la pale de remplacement 11B allongée sur son pont.

Dans une deuxième étape, illustrée à la figure 2, lorsque le système de levage est suffisamment proche de l'éolienne, la plateforme 112 est immobilisée et dressée sur le fond marin. La pale endommagée est quant à elle immobilisée à l'horizontale, au-dessus de la plateforme 112, et la nacelle 8 est immobilisée en rotation autour de l'axe d'éolienne X1. Dans cette position de la plateforme et de la pale endommagée 11A, l'axe X111 du système est disposé à proximité du centre de gravité 11G de la pale endommagée, et l'outil 117 est sensiblement à l'aplomb de la pale endommagée.

Dans une troisième étape, illustrée à la figure 3, on déploie le mât du système de levage 111 jusqu'à ce qu'il atteigne la position déployée P2. Le coulisseau 119 est déporté selon la direction C1 (voir la figure 3) vers la gauche relativement à l'axe X111 du système. Dans cette position, l'outil 117 vient au contact de la pale endommagée et la maintient, de sorte qu'elle peut être désolidarisée du rotor 9. Le centre de gravité 11G de la pale 11A est sensiblement centré sur le coulisseau 119. L'orientation du T ainsi que la hauteur des supports 119A sont ajustées de façon à garantir que l'étape suivante de désolidarisation se fasse sans abimer ni la pale 11A, ni le rotor 9

Dans une quatrième étape, illustrée à la figure 4, la pale endommagée 11A est désolidarisée du rotor 9 ; le coulisseau, portant la pale 11A, est déplacé horizontalement vers la droite selon la direction C2 (voir la figure 4), de sorte que le centre de gravité 11G de la pale endommagée 11A coïncide sensiblement avec l'axe X111 du système.

Dans une cinquième étape, illustrée à la figure 5, le mât 16 du système de levage 111 est rétracté jusqu'à sa position rétractée P1, dans laquelle la pale endommagée peut être saisie par la grue secondaire 113, à l'aide d'un dispositif de crochets 113C.

Dans une sixième étape, illustrée à la figure 6, la grue secondaire retire la pale endommagée 11A de l'outil 117 et la dépose sur le pont 112P de la plateforme 112, à côté de la pale de remplacement 11B.

Dans des étapes suivantes, non illustrées mais similaires aux précédentes mais dans un ordre inversé, on vient fixer la pale de remplacement 11B au rotor 9 :
- la grue secondaire 113 saisit la pale de remplacement 11B et la pose sur l'outil 117 ; puis,
- on déploie le mât 16 du système 111 jusqu'à la position déployée P2, dans laquelle la pale de remplacement est en vis-à-vis du rotor 9 ; puis,
- on déplace le coulisseau en direction du rotor 9, on ajuste l'orientation du T et la hauteur des supports 119A jusqu'à ce que la pale de remplacement 11B soit dans une position telle qu'elle puisse être fixée au rotor 9 ; puis,
- on ramène le mât 16 dans sa position rétractée ; puis,
- on désolidarise la plateforme 112 du fond marin 109, puis la plateforme s'éloigne par flottaison, emportant avec elle la pale endommagée 11A.

On va maintenant décrire un deuxième procédé mis en œuvre à l'aide d'un système selon l'invention en référence aux figures 7 à 9. Il sera décrit en ce qu'il diffère du premier procédé précédemment décrit, et en ce que les moyens pour sa mise en œuvre diffèrent de ceux utilisés pour la mise en œuvre du premier procédé.

Ce deuxième procédé permet le levage d'une charge lourde 130 ; cette charge est logée dans la nacelle 8 et doit en être retirée. Pour la mise en œuvre de ce deuxième procédé, l'outil 117 est équipé de moyens de treuil 117T, au moins à l'une de ses extrémités ; à la figure 7, c'est l'extrémité droite de l'outil qui est équipée des moyens de treuil 117T. L'outil 117 est monté pivotant relativement au mât 16, autour de l'axe X11 du système.

Dans une première étape, illustrée à la figure 7, la plateforme 112 et le système de levage 111 sont disposés de sorte que les axes X1 de l'éolienne et X111 du système sont à une deuxième distance D2 l'un de l'autre, adaptée à la mise en œuvre du deuxième procédé. Le mât 16 est dans une deuxième position déployée P3. Dans cette position, le mât atteint une taille supérieure à celle atteinte dans la position déployée P2 notamment illustrée aux figures 3 et 4 ; l'extrémité droite de l'outil est située au-dessus de la nacelle 8 ; les moyens de treuils 117T comprennent un câble 121 qui s'étend verticalement depuis cette extrémité jusqu'à la charge, à laquelle il est attaché.

Dans une deuxième étape, illustrée à la figure 8, la charge 130 est d'abord extraite de la nacelle 8 verticalement, vers le haut.

Dans une troisième étape, illustrée à la figure 9, on fait ensuite pivoter l'outil autour de l'axe X111 du dispositif, ici de cent-quatre-vingts degrés d'angle, afin de l'éloigner de l'emprise horizontale de l'éolienne 2.

Dans des étapes suivantes, non illustrées, la charge 130 est ensuite descendue sur le pont de la plateforme 112, afin d'être évacuée.

Des étapes non illustrées, similaires aux précédentes mais dans un ordre inversé, permettent de mettre en place une charge lourde, amenée par flottaison grâce à la plateforme, dans la nacelle.

Bien entendu, un procédé similaire peut être mis en œuvre à l'aide du même système ou similaire, pour déplacer toute charge ou tout équipement de l'éolienne.

On va maintenant décrire un troisième procédé mis en œuvre à l'aide d'un deuxième mode de réalisation d'un système selon l'invention, en référence à la figure 10, à l'aide d'un deuxième mode de réalisation pour l'outil 117.

Dans ce deuxième mode de réalisation, l'outil 117 comprend un manchon 118 et une double flèche 120. Le manchon 118 est fixé à l'élément supérieur 16C ; il est déporté relativement au mât 16 du système 111. Aux figures 10 et 11, le manchon est déporté vers l'avant de chaque figure. La double flèche 120 est montée dans le manchon de façon à pouvoir y coulisser horizontalement. Aux figures, le coulissement est prévu de gauche à droite, et inversement, de chaque figure. La double-flèche 120 comprend deux extrémités 120D, 120G, dépassant du manchon, respectivement à droite et à gauche du manchon aux figures. Le déport du manchon relativement au mât évite que la pale 11A manipulée vienne en interférence avec le mât 16. Chaque extrémité 120D, 120G de la flèche 120 porte un câble de levage respectif 121, monté sur treuil. Chaque câble 121 porte un crochet 122.

Le système comprend un mât 16 et un outil 117. Le mât 16 s'étend verticalement selon un axe de système X111 parallèle à l'axe d'éolienne X1, depuis la plateforme 112. Le mât 16 comprend un élément inférieur 16A, des éléments intermédiaires 16B et un élément supérieur 16C. La tête de levage 117 est fixée à l'élément supérieur 16C. La plateforme 112 comprend des moyens de fixation (non représentés) pour une base du mât 16. L'élément inférieur 16A comprend ou constitue la base du mât 16.

Un coulissement horizontal de la flèche 120 dans le manchon 118 permet d'éloigner ou de rapprocher la pale 11A du nez 12. Un enroulement ou un déroulement simultané des câbles 121, a une même vitesse, permet une translation, respectivement de bas en haut ou de haut en bas, de la pale 11A. Un usage indépendant des câbles, permet de contrôler l'inclinaison de la pale 11A relativement à l'horizontale.

Dans la position illustrée à la figure 10, la pale à changer 11A repose horizontalement sur les crochets 122, en vis-à-vis du nez 12. Dans cette position, la pale 11A peut être boulonnée au nez ou déboulonnée du nez 12.

La système 111 peut être montée à l'aide de la grue secondaire 113 ou d'une grue flottante de capacité et de portée réduites, par rapport à ce qui est nécessaire pour manipuler la pale 11A. Avantageusement, comme dans les modes de réalisation illustrés aux figures 1 à 9, au moins certains des éléments intermédiaires et supérieurs 16B-16C du mât 16 sont télescopables entre eux ; ainsi, un système de capacité encore plus réduite peut être utilisée pour le montage du système 111.

Les éléments 16A-16C peuvent être tubulaires ou en structure treillis.

A la figure 11, la pale à changer 11A est détachée du nez 12 et suspendue aux câbles 121. Elle est représentée en cours de descente. Le système 111 est avantageusement disposée sur la plateforme 112 pour pouvoir déposer la pale 11A sur un bateau annexe accouplé à la plateforme 112 ou sur la plateforme 112 elle-même. Dans ce dernier cas, la grue secondaire 113 peut être prévue pour reprendre la pale 11A sur la plateforme 112 et la déposer sur l'annexe ou sur un quai, si la plateforme a été utilisée pour y apporter la pale 11A.

Dans un processus inverse, une nouvelle pale peut être mise en place pour remplacer la pale 11A ainsi retirée de l'éolienne 1.

En référence à la figure 12, on va maintenant décrire un perfectionnement du mode de réalisation et du procédé décrits aux figures 7 à 9, en ce qu'il en diffère.

Le système illustré comprend ici un bras horizontal 131 qui relie rigidement l'élément supérieur 16C avec la nacelle 8. Ce bras permet de sécuriser le mât 16. Il permet d'optimiser le système, notamment d'utiliser un mât de section allégée, qui peut être plus facilement déplacé et mis en œuvre.

Au lieu d'un seul bras fixe relié à la nacelle, au moins un des éléments intermédiaires 16B peut comprendre un bras monté coulissant sur le poteau, par exemple sur un rail prévu à cet effet, de sorte que la rigidité du mât 7 de l'éolienne assure la rigidité du mât 16 du système 111 durant le déploiement ou de rétraction du mât. Cela permet d'utiliser un système plus léger, de même qu'une grue secondaire plus légère, pour le montage du système.

En référence à la figure 13, on va maintenant décrire un troisième mode de réalisation, en ce qu'il en diffère des modes de réalisation précédemment décrits.

Dans ce mode de réalisation, le système comprend une base 135 fixe sur le pont 112P de la plateforme 112. Le mât 16, notamment l'élément inférieur 16A, est monté rotatif sur la base 135. L'outil de levage 117 comprend une poutre horizontale 136 rigidement disposée au sommet de l'élément supérieur 16C, dont chaque branche s'étend de part et d'autre de l'axe X111 du système sur même une distance L136. Un treuil 137 est fixé à l'élément inférieur 16A, de sorte qu'il tourne autour de l'axe X111 du système, en même temps que le mât 16. Un câble 138, relié au treuil, permet le levage d'une charge 130. Le système comprend un premier renvoi de câble 139A et un deuxième renvoi de câble 139B, par exemple des poulies, chacun disposé à une extrémité respective de la poutre 136 de sorte que :
- entre les deux renvois, le câble est sensiblement horizontal, ;
- le câble s'étend verticalement entre le treuil et le premier renvoi 139A ; et,
- une extrémité libre du câble s'étend au-delà du deuxième renvoi 139B, pour y suspendre la charge 130.

Par cette disposition, les charges de levage sont sensiblement alignées avec l'axe X111 du système 111, de sorte que le système est optimisé.

Bien sûr, ce deuxième objet de l'invention n'est pas limité e aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus en référence aux figures 1 à 13, à la lumière de l'enseignement qui vient de lui être divulgué.

Ainsi, la plateforme Jack-up peut aussi ne pas être équipé d'une grue secondaire. Dans ce cas, un retour au port peut se faire avec le système en position retractée et la pale posée sur l'outil de levage, puis, un échange de pale avec une grue portuaire ou un autre moyen de levage et un retour de la plateforme auprès de l'éolienne pour la mise en place de la nouvelle pale.

Le système peut être une grue à tour équipée d'une flèche tournante autour d'un axe vertical.

Aussi, dans le deuxième mode de réalisation, au lieu de câbles indépendants, l'outil peut comprendre un palonnier.

Dans les procédés selon la présente invention, le système et l'éolienne étant fixés au fond marin, au moins indirectement, ils ont des positions relatives fixes ; ceci réduit notablement les difficultés de manipulation d'une pale. En outre, l'utilisation d'un système modulaire permet de réduire les moyens nécessaires à la manipulation de la pale. On peut ainsi utiliser une plateforme jack-up d'un type plus courant, plus disponible et moins couteux.

Les procédés selon la présente invention ne sont pas réservés aux éoliennes du type décrit. Ces procédés peuvent aussi s'appliquer à des éoliennes montées sur une plateforme de type barge ou à des éoliennes ayant une plateforme comprenant des poteaux rigides qui la maintiennent fixée au fond de la mer ou des éoliennes montées sur des embases gravitaires.

Aussi, un procédé selon l'invention peut être utilisé pour une réparation d'une pale, la même pale étant remise en place une fois l'entretien effectué. Cet entretien est avantageusement fait sur la plateforme 112, s'il n'est pas nécessaire de rapporter la pale dans un port.

On va maintenant décrire le troisième objet de l'invention, en référence aux figures 15 à 24. Dans la description qui suit, certains termes utilisés, tels que « gauche » ou « droite » n'ont rien d'absolu et font généralement référence à une position sur une des figures sans qu'ils puissent être considérés comme une limitation à la portée de l'invention. Le mat de l'éolienne est considéré comme vertical pour simplifier la description, bien que sa position soit dans la réalité soumise aux effets de la houle et du vent.

La figure 15 illustre un système d'éolienne 1. Dans l'exemple illustré, le système comprend une éolienne 2 montée sur une plateforme flottante 3. La plateforme 3 comprend des flotteurs 4 et une structure rigide 6. Les flotteurs sont généralement au nombre de trois ou quatre. L'éolienne s'étend verticalement selon un axe principal X1 de l'éolienne et les flotteurs sont régulièrement répartis autour de cet axe X1. La structure 6 relie les flotteurs entre eux et supporte l'éolienne 2. Un tel système d'éolienne flottante est notamment connu du document FR 3 053 020 A1 (Dietswell).

Dans l'exemple illustré, l'éolienne 2 comprend un mât 7 tubulaire portant en son sommet une nacelle 8 comprenant un unique rotor 12 et trois pales 11 fixées au rotor 12. Le mât 7 s'étend selon l'axe d'éolienne X1.

La figure 15 illustre le changement d'une pale 11A par un procédé selon l'invention à l'aide d'un engin de levage 14 comprenant un fût 15. L'engin 14 est monté au sommet d'un flotteur porteur 4A parmi les flotteurs 4 de la plateforme 3. Le fût 15 est vertical autour d'un axe de levage X15 ; dans l'exemple illustré, il comprend six éléments tubulaires 16 montés verticalement coulissants l'un dans l'autre. L'engin 14 est équipé, au sommet du fût, d'un outil de préhension 218 pour une pale 11A parmi les pales 11.

L'engin de levage 14 et l'outil 218 sont définis pour que la descente de charge de l'outil 218 et la pale 11A qu'il porte reste à tout moment le plus près possible de la fibre neutre, c'est-à-dire de l'axe X15 du fut 15 pour éviter sensiblement tout moment, toute contrainte radiale voire du flambage.

Une barge 219 est stationnée à proximité du système d'éolienne 1. Elle est équipée d'une grue 220 à flèche basculante en treillis. La barge 219 est utilisée pour apporter la pale 11A si elle est nouvelle ou emporter cette pale si elle est endommagée ; elle permet de faire l'échange entre une pale endommagée et une pale de remplacement. Dans l'exemple illustré la barge 219 est du type Jack-up ; si les fonds marins sont trop profonds, on peut utiliser une barge maintenue flottante au voisinage du système 1. Avec des moyens et un procédé selon l'invention, les mouvements relatifs du système d'éolienne 1 et de la barge 219 ne sont pas un handicap pour la manipulation de la pale 11A. Cette opération peut être réalisée sans endommager la pale ou l'éolienne.

Les figures 16 à 24 illustrent le montage d'une nouvelle pale 11A sur l'éolienne 2, à l'aide de l'outil 218.

On va maintenant décrire l'outil 218 en référence à la figure 16. Comme cela est particulièrement visible à la figure 16, l'outil 218 comprend deux parties principales 221, 222, dissociables l'une de l'autre ; une première partie forme un palonnier 221 pour la préhension de la pale 11A, la deuxième partie est un positionneur 222 pour positionner la pale relativement au rotor 12. Aux figures, le positionneur 222 est fixé au sommet du fût 15. À la figure 16, le fût est en position rétractée c'est-à-dire que les éléments 16 sont emboîtés entre eux.

Notamment pour les besoins de la description de la figure 16, on appelle longitudinal ce qui est sensiblement parallèle à la pale, c'est-à-dire qui s'étend de gauche à droite sur la figure ; on appelle transversal ce qui est perpendiculaire au plan de la figure, donc transversal à la pale, dans un plan horizontal.

Le palonnier 221 comprend :
- un montant 223 s'élevant dans un plan vertical transversal,
- une élingue 224 fixée à une extrémité supérieure du montant ; et,
- des moyens de prise 26, fixés à une extrémité inférieure du montant.

Dans l'exemple illustré, les moyens de prises 26 comprennent une vergue 27 disposée longitudinalement et deux pinces 28, chacune à une extrémité longitudinale respective de la vergue 27. La vergue porte en outre deux manchons 33.

Chaque pince 28 comprend une mâchoire inférieure 31 et une mâchoire supérieure 32. La mâchoire inférieure est fixe relativement à la vergue 27 et au montant 223. La mâchoire supérieure est mobile verticalement, de sorte que lorsque la pale repose sur la mâchoire inférieure, la mâchoire supérieure vient la pincer pour la maintenir en prise.

Le positionneur 222 comprend une base 35 prévue pour y faire reposer le palonnier 221. Deux perches 36B, 36H s'étendent verticalement vers le haut depuis la base 35. Les perches sont prévues pour être enfilées chacune dans un manchon 33 respectif du palonnier 221, de façon ajustée. Les perches ont des hauteurs différentes, de sorte qu'une perche 36H la plus haute est d'abord introduite dans son manchon respectif puis la perche 36B la plus basse dans le sien. Ainsi, les perches n'étant pas introduites en même temps, l'opération est facilitée. La base 35 et les perches 36A, 36B permettent d'accoupler précisément le palonnier 221 et le positionneur 222.

Le positionneur 222 comprend en outre un chariot 37, un guide longitudinal, ici une poutre longitudinale 38, et un connecteur 39. Dans l'exemple illustré, le connecteur a la forme d'une colonne qui est fixée sur une extrémité supérieure du fût 15. Le connecteur est équipé de moyens pour permettre une rotation autour de l'axe vertical X15.

La poutre 38 est disposée à une extrémité supérieure du connecteur ; elle est reliée à ce dernier par une liaison pivot qui permet son basculement autour d'un axe horizontal transversal. Un actionneur basculeur 42 permet de piloter le basculement ; dans l'exemple illustré, le basculeur 42 est un vérin, monté fonctionnellement entre le connecteur et la poutre.

Le chariot 37 est monté pour pouvoir coulisser longitudinalement sur la poutre 38. Un actionneur longitudinal 43 permet de piloter une translation longitudinale du chariot par rapport à la poutre ; dans l'exemple illustré, cet actionneur est un vérin longitudinal 43, monté fonctionnellement entre le chariot et la poutre.

La base 35 est montée pour pouvoir coulisser transversalement sur le chariot 37. Un actionneur transversal 43 permet de piloter une translation transversale de la base 35 relativement au chariot ; dans l'exemple illustré, cet actionneur est un vérin longitudinal 44, monté fonctionnellement entre le chariot et la base. Ce vérin étant transversal, il est représenté aux figures par un cercle.

La figure 16 illustre une première étape pour la mise en place de la pale 11A sur l'éolienne 2. Dans des étapes préalables, on a mis en place la pale 11A dans le palonnier 221 et on a utilisé le palonnier pour charger la pale sur la barge 219.

Dans cette première étape, le palonnier 221 est suspendu par son élingue 224 à un crochet 220A de la grue 220 de la barge 219, au-dessus du positionneur 222. Dans la position illustrée, les perches 36B, 36H sont sensiblement alignées avec les manchons 33. On note que le palonnier 221 est conçu afin que la pale 11A puisse y être disposée de sorte que, dans la position de la figure 15, son centre de gravité G est sensiblement aligné avec l'axe X15 du fût 15 ; la pale a un axe longitudinal XA, passant par le centre de gravité G, sensiblement horizontal.

La figure 17 illustre une troisième étape pour la mise en place de la pale 11A sur l'éolienne 2. Dans cette étape, le palonnier a été emboité sur le positionneur 222. Pour cet emboîtement, à mesure où l'on a rapproché le palonnier du positionneur, on a d'abord enfilé la perche haute 36H dans le manchon 33 correspondant, puis la perche basse 36B dans l'autre manchon 33. Dans la position de la figure 17, l'outil 218 est constitué ; le palonnier repose sur la base 35 et n'est plus tenu par la grue 220.

La figure 18 illustre une troisième étape pour la mise en place de la pale 11A sur l'éolienne 2. Dans cette étape, le fût 15 est en cours de déploiement vers le haut et la pale 11A est soulevée.

La figure 19 illustre une quatrième étape pour la mise en place de la pale 11A sur l'éolienne 2. Dans cette étape, le fût 15 a continué à se déployer et la pale 11A à mettre en place est quasiment à la hauteur du rotor 12. Le rotor comprend trois brides 50 pour y fixer des pales. Deux des brides 50 sont occupées chacune par une pale 11 respective. La troisième bride 50A est libre pour recevoir la pale 11A à y mettre en place. La bride 50A porte un axe de bride X5 qui doit être aligné avec l'axe XA de la pale 11A pour pouvoir la fixer à la bride 50A.

On note que, dans le plan de la figure, l'axe X5 de la bride est incliné d'un angle AH par rapport à un plan horizontal H.

Les figures 20 et 21 illustrent une cinquième étape pour la mise en place de la pale 11A sur l'éolienne 2. Dans cette étape, l'axe XA de la pale est aligné avec l'axe X5 de la bride 50A sur laquelle elle doit être fixée. Pour effectuer cette étape d'alignement on utilise trois degrés de liberté offerts par le positionneur 222.

Comme illustré aux figures 20 et 21 :
- une action du vérin 42 selon la flèche T1 (voir la figure 20), permet un basculement de la pale 11A autour du pivot 41 ;
- une action du connecteur 39 permet une rotation selon la flèche R2 de la pale 11A autour de l'axe X15 du fût ;
- une action du vérin 44 selon la flèche T2 (voir la figure 21), permet une translation transversale de la pale 11A ;

On utilise en outre, une rotation selon la flèche R3 de la nacelle 8 autour de l'axe X1 de l'éolienne qui, en combinaison avec la rotation R2 et la translation T2 de la pale 11A, permettent d'aligner dans le plan horizontal, la pale 11A à mettre en place et la bride ; ce qui est particulièrement illustré à la figure 21.

L'alignement peut être fait par un opérateur à l'aide de moyens de télécommande. Il peut aussi être réalisé automatiquement, par exemple à l'aide de faisceaux laser et de cibles.

La figure 22 illustre une septième étape pour la mise en place de la pale 1 1A sur l'éolienne 2. Dans cette étape, on vient fixer la pale 11A à mettre en place sur sa bride 50A. Leurs axes XA et X5 étant alignés, on rapproche la pale 11A jusqu'à ce qu'elle soit en contact avec la bride 50A. Pour cela on déplace le chariot 37 en translation le long de la poutre 38, selon la flèche T3, à l'aide du vérin longitudinal 43. Une fois en contact, la pale 11A est fixée sur sa bride 50A, par exemple par boulonnage.

La figure 23 illustre une huitième étape pour la mise en place de la pale 11A sur l'éolienne 2. Dans cette étape, on soulève les mâchoires supérieures 32, selon la flèche F1, puis on abaisse l'outil selon la flèche F2 en rétractant le fût 15, de sorte que la pale 11A mise en place ne soit pas en contact avec les mâchoires 31, 32.

La figure 24 illustre une neuvième étape pour la mise en place de la pale 11A sur l'éolienne 2. Dans cette étape, on fait pivoter la nacelle selon la flèche R4, de façon à sortir la pale mise en place de l'emprise verticale de l'outil 218.

Dans des phases ultérieures, l'outil est repositionné en alignement sur l'axe X15 du fût 15, puis le fût est rétracté.

Bien sûr, ce troisième objet de l'invention n'est pas limité aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus en référence aux figures 15 à 24, à la lumière de l'enseignement qui vient de lui être divulgué.

Ainsi, des étapes similaires à celles précédemment décrites, sensiblement dans un ordre inverse, permettent de déposer une pale endommagée, avant de mettre en place une nouvelle pale en remplacement.

Aussi, les perches peuvent être portées par le palonnier et venir se prendre dans des manchons du positionneur. Elles peuvent aussi être plus courtes que dans la représentation qui en est faite sur les figures.

Aussi, la poutre du positionneur peut, par exemple, être remplacée par deux poutres parallèles ou par un plateau, pour une plus grande stabilité.

Les moyens de rotation autour de l'axe de fût peuvent être propres au fût et non au connecteur de l'outil.

L'élingue du palonnier peut être remplacée par tous moyens d'accroche, notamment un anneau ou un crochet.

On va maintenant décrire le quatrième objet de l'invention, en référence aux figures 25 à 34. Dans la description qui suit, certains termes utilisés, tels que « gauche » ou « droite » n'ont rien d'absolu et font généralement référence à une position sur une des figures sans qu'ils puissent être considérés comme une limitation à la portée de l'invention. Aussi, le mât de l'éolienne est considéré comme vertical pour simplifier la description, bien que sa position soit dans la réalité soumise aux effets de la houle et du vent.

La figure 25 illustre un système d'éolienne 1. Dans l'exemple illustré, le système comprend une éolienne 2 montée sur une plateforme flottante 3. La plateforme 3 comprend des flotteurs 4 et une structure rigide 6. Les flotteurs sont généralement au nombre de trois ou quatre. L'éolienne s'étend verticalement selon un axe principal X1 de l'éolienne et les flotteurs sont régulièrement répartis autour de cet axe X1. La structure 6 comprend des poutrelles tubulaires reliant les flotteurs entre eux ; elle supporte l'éolienne 2. Un tel système d'éolienne flottante est notamment connu du document FR 3 053 020 A1 (Dietswell).

Dans cet exemple, l'éolienne comprend un mât 7 tubulaire reposant sur la structure 6 et s'étendant verticalement vers le haut, selon l'axe principal X1. Il porte en son sommet une nacelle 8 dont l'unique rotor 9 comprend trois pales 11 fixées à une ogive 12. Le mât comprend un pied tubulaire 10 qui s'étend sensiblement sur une même hauteur que les flotteurs 4. La structure 6 comprend notamment des poutrelles tubulaires 6A qui relie les flotteurs 4 entre eux et qui relient le pied 7A du mât aux flotteurs.

La figure 25 illustre le changement d'une pale 11A par un procédé selon l'invention à l'aide d'un engin de levage 14 comprenant un fût 15. L'engin 14 est monté au sommet d'un flotteur porteur 4A parmi les flotteurs 4 de la plateforme 3. Le fût 15 est vertical autour d'un axe de levage X15 ; dans l'exemple illustré, il comprend six éléments tubulaires 16 montés verticalement coulissants l'un dans l'autre. L'engin 14 est équipé, au sommet du fût, d'un outil de préhension 218 pour la pale 11A qui est en cours de changement.

Une barge 219 est stationnée à proximité du système d'éolienne 1. Elle est équipée d'une grue 220 à flèche basculante en treillis. La barge 219 est utilisée pour apporter la pale 11A si elle est nouvelle ou emporter cette pale si elle est endommagée ; elle permet de faire l'échange entre une pale endommagée et une pale de remplacement. Dans l'exemple illustré la barge 219 est du type Jack-up ; si les fonds marins sont trop profonds, on peut utiliser une barge maintenue flottante au voisinage du système 1.

Cependant, ce procédé sollicite particulièrement le plancher 321 qui ferme le flotteur à son extrémité supérieure ; ce qui nécessite de renforcer le plancher, ce qui alourdit notablement le flotteur. Dans le cas d'un champ d'éoliennes, il faudrait renforcer le plancher de chaque plateforme d'éolienne, au cas peu probable où une opération de maintenance lourde serait nécessaire sur l'une d'elle. Ceci aurait un coût excessif.

Dans les exemples qui seront décrits par la suite, en référence aux figures 25 à 34, on utilise une charpente 30 qui sert d'appui intermédiaire à l'engin de levage 14. Dans ces exemples, la charpente prend la forme d'une poutre de type treillis.

Dans un deuxième mode de réalisation, illustré aux figures 25 à 28, l'éolienne 2, comme dans l'exemple de la figure 24, est centrée relativement aux flotteurs ; les flotteurs sont ici au nombre de trois, régulièrement répartis autour du pied 10 du mât de l'éolienne 2. Une première extrémité 331 de la charpente 30 repose sur le pied 10 du mât 7 et une deuxième extrémité 332 de la charpente repose sur un flotteur 4A. Le pied porte une console 333 qui s'étend en direction du flotteur d'appui 4A, sur laquelle repose la première extrémité 331 de la charpente. La deuxième extrémité 332 comprend un chevêtre transversal 334 qui permet de reporter les charges sensiblement sur la paroi périphérique cylindrique 336 du flotteur porteur 4A suffisamment rigide pour en supporter le poids sans qu'il soit nécessaire de la renforcer notablement pour ce seul usage.

L'exemple des figures 26 et 27, similaire à celui de la figure 25, illustre la manipulation d'une pale 11A. L'engin de levage 14 est disposé à proximité de la deuxième extrémité 332 de la charpente 30, de sorte que lors de sa manipulation le centre de gravité G de la pale 11A soit toujours aussi peu éloigné que possible de l'aplomb du fût 15 de l'engin 14. La présence du chevêtre permet de disposer le fût 15 sensiblement dans le prolongement du flotteur d'appui 4A, sans en solliciter le plancher 321.

L'exemple de la figure 28 illustre la manipulation d'une charge lourde 130 pour l'équipement de la nacelle 8 de l'éolienne 2. Le sommet du fût de l'engin de levage 14 est équipé d'une grue sommitale 338, adaptée au levage de la charge 130, en remplacement de l'outil 218 utilisé pour manipuler une pale. Le fût est disposé sur la structure 30, plus proche de la première extrémité 331 que de la deuxième extrémité 332, de sorte que la portée nécessaire pour le levage de la charge soit réduite au minimum ; cela permet de limiter le poids de la grue sommitale, de limiter le moment de flexion exercé sur le fût, et ainsi, d'utiliser un fût plus léger.

Dans un troisième mode de réalisation, illustré aux figures 29 à 31, les flotteurs sont au nombre de trois. À la différence des exemples précédemment décrits, c'est un flotteur de base 4B, parmi les trois flotteurs 4, qui sert de pied au mât de l'éolienne 2. Le plancher qui ferme le sommet du flotteur de base 4B forme autour du mât une margelle annulaire 341. Une première extrémité 331 de la charpente 30 repose sur la margelle 341 et une deuxième extrémité 332 de la charpente repose sur un flotteur porteur 4A. Pour chacune des deux extrémités 331, 332, l'appui de la charpente se fait sensiblement sur la paroi périphérique cylindrique 336 des flotteurs 4A, 4B, suffisamment rigide pour en supporter le poids sans qu'il soit nécessaire de la renforcer notablement pour ce seul usage. L'exemple des figures 29 et 30, similaire à celui des figures 26 et 27, illustre la manipulation d'une pale 11A. L'engin de levage 14 est disposé à distance des deux extrémités 331, 332 de la charpente 30, de sorte que lors de sa manipulation le centre de gravité G de la pale 11A soit toujours aussi peu éloigné que possible de l'aplomb du fût 15 de l'engin 14.

L'exemple de la figure 31, similaire à celui de la figure 28, illustre la manipulation d'une charge lourde 130 pour l'équipement de la nacelle 8 de l'éolienne 2. Le sommet du fût de l'engin de levage 14 est équipé de la grue sommitale 338. Le fût est disposé sur la structure 30, plus proche de la première extrémité 331 que de la deuxième extrémité 332, de sorte que la portée nécessaire pour le levage de la charge 130 soit réduite au minimum.

La figure 32, est une vue agrandie et en perspective de la charpente 30, sensiblement dans la direction notée D8 à la figure 31. On peut voir à la figure 32 que la plateforme 3 comprend une passerelle piétonne 48 qui relie le planchers 321, du flotteur porteur 4A et la margelle 341 du flotteur de base 4B afin que du personnel d'exploitation de l'éolienne puisse passer d'un flotteur à l'autre.

La charpente 30 a une section en forme de « U » inversé, comprenant deux longerons 350, chacun disposé de part et d'autre de la passerelle 48 ; elle comprend en outre un tablier longitudinal 52, reliant les deux longerons 350 entre eux et surplombant la passerelle 48. Cette disposition permet d'utiliser la structure 30 sans modifier la plateforme 3.

La figure 33 illustre un quatrième mode de réalisation pour l'invention. Dans cet exemple, comme dans ceux des figures 29 à 32, l'éolienne est fixée sur un flotteur de base 4B. Le sommet du flotteur de base est relié au sommet de chacun des deux autres flotteurs par une poutrelle horizontale respective 6A de la structure 3. Chaque extrémité de la charpente 30 repose sur une poutrelle 6A respective ; la charpente forme avec les poutrelles un triangle sensiblement équilatéral dont la charpente est la base et dont l'éolienne occupe le sommet opposé à la base. Le fût 15 est fixé sensiblement à mi-distance des extrémités de la charpente.

Ici, l'engin de levage 14 comme aux figures 25, 26 et 26 est utilisé pour manipuler une pale 11A. Pour manipuler une charge lourde, la poutre peut être rapprochée du mât 7 de l'éolienne, tout en conservant une configuration similaire.

La figure 34 illustre des moyens utilisables pour positionner une charpente 10 selon l'invention sur la structure 3 d'un système d'éolienne, par exemple sur deux flotteurs 4 voisins. Dans l'exemple illustré, chaque flotteur porte une perche 56, 57 respective, toutes deux sensiblement verticales. Une première perche 56 est plus haute que la deuxième perche 57. Chaque perche est prévue pour venir s'emboiter dans un logement 58 respectif formé à une extrémité respective de la charpente 30.

Lors de la mise en place de la charpente sur la structure, la première perche pénètre d'abord dans le logement qui lui est réservé, ce qui permet de positionner l'extrémité correspondante de la charpente. Une fois que cette première extrémité est correctement positionnée et maintenue par la première perche 56, il reste à faire pénétrer la deuxième perche, plus petite, dans son propre logement 58, afin de positionner et maintenir la deuxième extrémité de la charpente. Une telle disposition permet de mettre en place la charpente sur la structure depuis une barge, sans que personne n'ait à intervenir sur la structure ou sur la charpente ; ceci garantie une sécurité optimisée du personnel d'entretien. Une fois posée sur un flotteur, la charpente y est fixée pour éviter tout risque de glissement ou de décollement.

Bien sûr, ce troisième objet de l'invention n'est pas limité aux exemples qui viennent d'être décrits. Au contraire, l'invention est définie par les revendications qui suivent.

Il apparaîtra en effet à l'homme de l'art que diverses modifications peuvent être apportées aux modes de réalisation décrits ci-dessus en référence aux figures 25 à 34, à la lumière de l'enseignement qui vient de lui être divulgué.

Ainsi, au lieu de perches de hauteurs différentes, on peut utiliser des logements de hauteurs différentes, ou toute autre disposition intermédiaire, de sorte qu'une perche vienne en prise avec son logement avant l'autre perche. Aussi, les perches peuvent être sur la charpente et les logements sur la structure.

Dans les descriptions ci-dessous, la charpente est en forme de poutre, avec une seule dimension principale ; une charpente selon l'invention pourrait aussi avoir deux dimensions principales et s'appuyer sur 3 appuis, par exemple sur trois flotteurs différents.

Aussi, le procédé n'est pas limité aux plateformes précédemment décrites. Il peut être utilisé sur d'autres type de plateformes, notamment des plateformes semi-submersibles : ayant quatre flotteurs et un mat central type XCF, ayant quatre flotteurs et un mat excentré, en T type Tri-Floater de NOV, ou, à deux turbines type Hexicon. Il est aussi applicable aux barges, par exemple de type BW-Ideol.

Dans chacun des cas, l'utilisation d'une charpente selon l'invention permet de changer une pale ou des éléments de la nacelle, de préférence avec une distance entre l'outil utilisé et le mât qui puisse varier, afin de limiter les moments dans le fût de l'engin de levage. En outre, une telle charpente permet de minimiser les renforts nécessaires à une telle opération en s'appuyant sur des points durs préexistants de la plateforme.

## Revendications

1. Ensemble (1) pour manipuler au moins une charge (11, 130) sur une éolienne (2) qui comprend un mât (7) rigidement fixé à un fond marin (109) et une nacelle (3) portée par ledit mât (7), ladite nacelle comprenant un rotor (9) ayant des pales (11) qui s'étendent radialement, l'ensemble comprenant :
- une plateforme autoélévatrice (112) ;
- un système de levage (111) sur ladite plateforme (112), ledit système comprenant un mât (16) sensiblement vertical selon un axe (X111) du système et constitué de plusieurs éléments (16A-16C) dont certains sont télescopables entre eux et un outil de levage (117) fixé sur un élément supérieur (16C) ;
- ledit système de levage comprenant une base (16A) et ladite plateforme comprenant des moyens (135) pour y fixer ladite base ; l'ensemble étant **caractérisé en ce qu'**il comprend:
- un élément inférieur (16A) parmi les éléments (16A-16C) formant ou constituant ladite base, ledit élément inférieur étant prévu pour être fixé sur ladite plateforme et un autre élément (16B) parmi lesdits éléments (16A-16C) étant prévu pour être monté coulissant dans ledit élément inférieur (16A).

2. Ensemble selon la revendication 1, **caractérisé en ce que** l'outil est fixé sensiblement au sommet d'un élément supérieur (16C) du mât et forme avec ledit mât une forme de « T ».

3. Ensemble selon la revendication 2, **caractérisé en ce que** l'outil de levage (117) comprend une poutre horizontale (120) montée au sommet de l'élément supérieur (16C) et formant un « T » avec cet élément, un coulisseau (119) monté coulissant horizontalement sur ladite poutre (120), ce coulisseau portant des moyens d'assise (119A), de préférence ajustables en hauteur, prévus pour y faire reposer une pale (11A, 11B).

4. Ensemble selon la revendication 3, **caractérisé en ce que** la poutre est montée rotative autour de l'axe (X111) du système et **en ce que** l'outil comprend, à une extrémité de ladite poutre, des moyens de treuil (117T).

5. Ensemble selon la revendication 4, **caractérisé en ce que** l'outil de levage (117) comprend un manchon (118) et une double flèche (120) montée pour coulisser horizontalement dans ledit manchon et dont deux extrémités (120D, 120G) dépassent chacune d'un côté respectif dudit manchon, chacune desdites extrémités portant un câble de levage (121) respectif.

6. Ensemble selon la revendication 1, **caractérisé en ce que** la base (135) est fixe relativement à la plateforme (112), le mât 16 étant monté rotatif sur ladite base (135) autour de l'axe (X111) du système, l'outil de levage (117) comprenant une poutre (136) sensiblement horizontale rigidement disposée au sommet de l'élément supérieur (16C), un treuil (137) étant fixé à l'élément inférieur (16A) de sorte qu'il tourne autour dudit axe, en même temps que ledit mât (16), et, un câble (138) relié au treuil, le système comprenant en outre un premier renvoi de câble (139A) et un deuxième renvoi de câble (139B), chacun disposé à une extrémité respective de la poutre (136) de sorte que :
- entre les deux renvois, ledit câble est sensiblement horizontal ;
- le câble s'étend verticalement entre le treuil et le premier renvoi (139A) ; et,
- une extrémité libre du câble s'étend au-delà du deuxième renvoi (139B) pour y suspendre une charge (130).

7. Ensemble selon l'une des revendications 1 à 6, **caractérisé en ce qu'**il est prévu pour manipuler au moins une charge (11, 130) sur une éolienne (2) qui comprend un mât (7) rigidement fixé à un fond marin (109) et comprend des moyens de bras (131) pour relier le mât (16) du système (111) avec le mât (7) de l'éolienne, de préférence au moins un bras monté coulissant sur ledit mât (7) de l'éolienne.

8. Ensemble selon la revendication 1, **caractérisé en ce que** l'outil est une grue sommitale (338).

9. Procédé pour manipuler au moins une charge (11, 130) sur une éolienne (2) qui comprend un mât (7) rigidement fixé à un fond marin (109) et une nacelle (3) portée par ledit mât (7), ladite nacelle comprenant un rotor (9) ayant des pales (11) qui s'étendent radialement, ledit procédé étant **caractérisé en ce qu'**il comprend des étapes pour :
- fournir un ensemble selon l'une des revendications 1 à 8 ;
- immobiliser ladite plateforme (112) à proximité de ladite éolienne (1) ; puis,
- monter le système de levage (111) sur ladite plateforme (112) ;
- immobiliser la nacelle (3) dans une position permettant la manipulation de ladite charge ;
- élever ledit mât, l'élévation dudit mât comprenant un télescopage des éléments télescopables entre eux ;
- saisir ladite charge ;
- abaisser ledit mât ; puis,
- libérer les mouvements de la nacelle et du rotor.

10. Procédé selon la revendication 9, pour manipuler ou fixer ou retirer une pale (11A, 11B) de l'éolienne (1), **caractérisé en ce qu'**il comprend des étapes pour :
- immobiliser la nacelle (3) et le rotor (9) et dans une position permettant la manipulation de ladite pale ;
- élever ledit mât, l'élévation dudit mât comprenant un télescopage des éléments télescopables entre eux ;
- manipuler ladite pale ;
- abaisser ledit mât ; puis,
- libérer les mouvements de la nacelle et du rotor.

## Patentansprüche

1. Vorrichtung (1) zum Handhaben mindestens einer Last (11, 130) an einer Windkraftanlage (2), die einen fest mit dem Meeresboden (109) verbundenen Mast (7) und eine von diesem Mast (7) getragene Gondel (3) aufweist, wobei die Gondel einen Rotor (9) mit sich radial erstreckenden Blätter (11) aufweist, wobei die Vorrichtung aufweist:
- eine selbsthebende Plattform (112);
- ein Hebesystem (111) auf der Plattform (112), wobei das System einen im Wesentlichen vertikalen Mast (16) entlang einer Achse (X111) des Systems aufweist, der aus mehreren Elementen (16A-16C) besteht, von denen einige teleskopisch ineinander verschiebbar sind, sowie ein Hebewerkzeug (117), das an einem oberen Element (16C) befestigt ist;
- wobei das Hebesystem eine Basis (16A) aufweist und die Plattform Mittel (135) zum Befestigen der Basis daran aufweist;
wobei die Anordnung **dadurch gekennzeichnet ist, dass** sie aufweist:
- ein unteres Element (16A) unter den Elementen (16A-16C), die die Basis bilden oder ausmachen, wobei das untere Element dazu vorgesehen ist, an der Plattform befestigt zu werden, und ein weiteres Element (16B) unter den Elementen (16A-16C) dazu vorgesehen ist, verschiebbar in dem unteren Element (16A) montiert zu werden.

2. Vorrichtung nach Anspruch 1, **dadurch gekennzeichnet, dass** das Werkzeug im Wesentlichen an der Spitze eines oberen Elements (16C) des Mastes befestigt ist und mit dem Mast eine T-Form bildet.

3. Vorrichtung nach Anspruch 2, **dadurch gekennzeichnet, dass** das Hebewerkzeug (117) einen horizontalen Träger (120) aufweist, der an der Spitze des oberen Elements (16C) angebracht ist und mit diesem Element eine "T"-Form bildet, einen Schlitten (119), der horizontal verschiebbar auf dem Träger (120) angebracht ist, wobei dieser Schlitten vorzugsweise höhenverstellbare Auflagevorrichtungen (119A) trägt, die dazu vorgesehen sind, ein Blatt (11A, 11B) darauf abzustützen.

4. Vorrichtung nach Anspruch 3, **dadurch gekennzeichnet, dass** der Träger um die Achse (X111) des Systems drehbar angebracht ist und dass das Werkzeug an einem Ende des Trägers eine Winde (117T) aufweist.

5. Vorrichtung nach Anspruch 4, **dadurch gekennzeichnet, dass** das Hebewerkzeug (117) eine Hülse (118) und einen Doppelausleger (120) aufweist, der horizontal in der Hülse verschiebbar angebracht ist und dessen zwei Enden (120D, 120G) jeweils über eine entsprechende Seite der Hülse hinausragen und jedes der Enden ein entsprechendes Hebeseil (121) trägt.

6. Vorrichtung nach Anspruch 1, **dadurch gekennzeichnet, dass** die Basis (135) relativ zur Plattform (112) feststehend ist, wobei der Mast (16) drehbar auf der Basis (135) um die Achse (X111) des Systems angebracht ist, wobei das Hebewerkzeug (117) einen im Wesentlichen horizontalen Träger (136) aufweist, der starr an der Spitze des oberen Elements (16C) angeordnet ist, wobei eine Winde (137) so am unteren Element (16A) befestigt ist, dass sie sich zusammen mit dem Mast (16) um die Achse dreht, und ein mit der Winde verbundenes Seil (138), wobei das System ferner eine erste Seilumlenkung (139A) und eine zweite Seilumlenkung (139B) aufweist, die jeweils an einem Ende des Trägers (136) angeordnet sind, so dass:
- das Seil zwischen den beiden Umlenkungen im Wesentlichen horizontal verläuft;
- sich das Seil vertikal zwischen der Winde und der ersten Umlenkung (139A) erstreckt; und
- sich ein freies Ende des Seils über die zweite Umlenkung (139B) hinaus erstreckt, um daran eine Last (130) aufzuhängen.

7. Vorrichtung nach einem der Ansprüche 1 bis 6, **dadurch gekennzeichnet, dass** sie zum Handhaben mindestens einer Last (11, 130) an einer Windkraftanlage (2) vorgesehen ist, die einen Mast (7) aufweist, der fest mit einem Meeresboden (109) und Armmittel (131) aufweist, um den Mast (16) des Systems (111) mit dem Mast (7) der Windkraftanlage zu verbinden, vorzugsweise mindestens einen Arm, der verschiebbar auf dem Mast (7) der Windkraftanlage montiert ist.

8. Vorrichtung nach Anspruch 1, **dadurch gekennzeichnet, dass** das Werkzeug ein Flachkopfkran (338) ist.

9. Verfahren zum Handhaben mindestens einer Last (11, 130) an einer Windkraftanlage (2), die einen fest mit einem Meeresboden (109) verbundenen Mast (7) und eine von dem Mast (7) getragene Gondel (3) umfasst, wobei die Gondel einen Rotor (9) mit sich radial erstreckenden Blätter (11) aufweist,
wobei das Verfahren **dadurch gekennzeichnet ist, dass** es die folgenden Schritte umfasst:
- Bereitstellen einer Vorrichtung gemäß einem der Ansprüche 1 bis 8;
- das Festhalten der Plattform (112) in der Nähe der Windkraftanlage (1); dann
- das Anbringen des Hebesystems (111) an der Plattform (112);
- Festhalten der Gondel (3) in einer Position, die die Handhabung der Last ermöglicht;
- Anheben des Mastes, wobei das Anheben des Mastes ein Ineinanderschieben der teleskopierbaren Elemente umfasst;
- Erfassen der Last;
- Absenken des Mastes; dann
- Freigeben der Bewegungen der Gondel und des Rotors.

10. Verfahren nach Anspruch zum Handhaben oder Befestigen oder Entfernen eines Blatts (11A, 11B) der Windkraftanlage (1), **dadurch gekennzeichnet, dass** es Schritte umfasst, um:
die Gondel (3) und den Rotor (9) in einer Position zu fixieren, die die Handhabung des Blatts ermöglicht;
- Anheben des Mastes, wobei das Anheben des Mastes ein Ineinanderschieben der teleskopierbaren Elemente umfasst;
- Handhaben des Blatts;
- Absenken des Mastes; dann
- Freigabe der Bewegungen der Gondel und des Rotors.

## Claims

1. Assembly (1) for handling at least one load (11, 130) on a wind turbine (2) comprising a mast (7) rigidly fixed to a seabed (109) and a nacelle (3) carried by said mast (7), said nacelle comprising a rotor (9) having blades (11) extending radially, the assembly comprising:
- a self-elevating platform (112);
a lifting system (111) on said platform (112), said system comprising a mast (16) substantially vertical along an axis (X111) of the system and consisting of several elements (16A-16C), some of which are telescopic with respect to each other, and a lifting tool (117) fixed to an upper element (16C);
said lifting system comprising a base (16A) and said platform comprising means (135) for attaching said base thereto;
the assembly being **characterised in that** it comprises:
a lower element (16A) among the elements (16A-16C) forming or constituting said base, said lower element being provided to be fixed to said platform and another element (16B) among said elements (16A-16C) being provided to be slidably mounted in said lower element (16A).

2. The assembly according to claim 1, **characterised in that** the tool is fixed substantially at the top of an upper element (16C) of the mast and forms a "T" shape with said mast.

3. Assembly according to claim 2, **characterised in that** the lifting tool (117) comprises a horizontal beam (120) mounted at the top of the upper element (16C) and forming a "T" with this element, a slide (119) mounted to slide horizontally on said beam (120), said slide bearing seating means (119A), preferably adjustable in height, provided for resting a blade (11A, 11B) thereon.

4. Assembly according to claim 3, **characterised in that** the beam is mounted so as to rotate. around the axis (X111) of the system and **in that** the tool comprises, at one end of said beam, winch means (117T).

5. Assembly according to claim 4, **characterised in that** the lifting tool (117) comprises a sleeve (118) and a double boom (120) mounted to slide horizontally in said sleeve and having two ends (120D, 120G) each protruding from a respective side of said sleeve, each of said ends carrying a respective lifting cable (121).

6. The assembly according to claim 1, **characterised in that** the base (135) is fixed relative to the platform (112), the mast (16) being mounted so as to rotate on said base (135) about the axis (X111) of the system, the lifting tool (117) comprising a substantially horizontal beam (136) rigidly disposed at the top of the upper element (16C), a winch (137) being fixed to the lower element (16A) so that it rotates about said axis, together with said mast (16), and a cable (138) connected to the winch, the system further comprising a first cable return (139A) and a second cable return (139B), each disposed at a respective end of the beam (136) such that:
- between the two pulleys, the cable is substantially horizontal;
- the cable extends vertically between the winch and the first pulley (139A); and
- a free end of the cable extends beyond the second return (139B) to suspend a load (130) therefrom.

7. Assembly according to one of claims 1 to 6, **characterised in that** it is designed to handle at least one load (11, 130) on a wind turbine (2) comprising a mast (7) rigidly fixed to the seabed (109) and comprises arm means (131) for connecting the mast (16) of the system (111) to the mast (7) of the wind turbine, preferably at least one arm mounted so as to slide on said mast (7) of the wind turbine.

8. Assembly according to claim 1, **characterised in that** the tool is a top crane (338).

9. Method for handling at least one load (11, 130) on a wind turbine (2) comprising a mast (7) rigidly fixed to a seabed (109) and a nacelle (3) carried by said mast (7), said nacelle comprising a rotor (9) having blades (11) extending radially, said method being **characterised in that** it comprises steps for:
- providing an assembly according to any one of claims 1 to 8;
- immobilise said platform (112) near said wind turbine (1); then,
- mounting the lifting system (111) on said platform (112);
- immobilise the nacelle (3) in a position allowing the handling of said load;
- raising said mast, the raising of said mast comprising telescoping the telescopic elements together;
- grasping said load;
- lower said mast; then,
release the movements of the basket and the rotor.

10. Method according to claim 9 for manipulating or fixing or removing a blade (11A, 11B) of the wind turbine (1), **characterised in that** it comprises steps for:
- immobilising the nacelle (3) and the rotor (9) in a position allowing the blade to be handled;
- raising said mast, the raising of said mast comprising telescoping the telescopic elements together;
- manipulating said blade;
- lowering said mast; then,
- releasing the movements of the nacelle and the rotor.
